# EUROPÄISCHE PATENTSCHRIFT

(11) **EP 3 546 133 B1**
(45) Veröffentlichungstag und Bekanntmachung des Hinweises auf die Patenterteilung: **21.04.2021**
(21) Anmeldenummer: 19169459.5
(22) Anmeldetag: 13.03.2017
(51) Int. Cl.: B25F 5/00, B23Q 11/00

(54) **STAUBSAMMELVORRICHTUNG MIT EINER STÜTZEINRICHTUNG**
DUST COLLECTING APPARATUS HAVING A SUPPORTING DEVICE
DISPOSITIF DE COLLECTE DE POUSSIÈRE DOTÉ D'UN AGENCEMENT DE SUPPORT

(30) Priorität: 22.03.2016 DE 102016105330
(43) Veröffentlichungstag der Anmeldung: 02.10.2019
(62) Teilanmeldung aus: 17160584.3
(73) Patentinhaber: Festool GmbH, 73240 Wendlingen am Neckar (DE)
(72) Erfinder: Albrecht, Hans-Peter, 73240 Wendlingen (DE)
(74) Vertreter: Patentanwälte Bregenzer und Reule Partnerschaftsgesellschaft mbB

(56) Entgegenhaltungen:
- EP-A1- 1 428 618
- DE-A1- 19 827 334
- US-A- 3 938 283
- US-A- 5 321 890
- US-A1- 2007 034 064

## Beschreibung

Die Erfindung betrifft eine Staubsammelvorrichtung für eine Hand-Werkzeugmaschine, insbesondere für eine Säge oder eine Schleifmaschine, gemäß dem Oberbegriff des Anspruchs 1.

Eine derartige Staubsammelvorrichtung ist beispielsweise in US 3,938,283 A erläutert.

Eine Staubsammelvorrichtung gemäß DE 10 2014 001 349 A1 kann in eine Faltstellung gebracht werden, sodass sie bei Nichtgebrauch weniger Platz braucht. Allerdings ist die Stützeinrichtung relativ aufwendig, weil mehrere Stützarme und am Längsendbereich eine Platte notwendig sind, um den Staubbehälter effektiv aufzuspannen. Die Staubsammelvorrichtung gibt bei Belastung nicht nach, beispielsweise wenn sie an das Werkstück anstößt, was ihre Anwendung beispielsweise bei einer Schleifmaschine erschwert.

Es ist daher die Aufgabe der vorliegenden Erfindung, eine verbesserte Staubsammelvorrichtung bereitzustellen.

Zur Lösung der Aufgabe ist eine Staubsammelvorrichtung gemäß der technischen Lehre des Anspruchs 1 vorgesehen.

Die Stützeinrichtung steift den Staubsammelraum quer zur Längsachse im Zwischenbereich zwischen dem Basiskörper und dem Querabschnitt der Staubsammelvorrichtung nicht über den gesamten Innenquerschnitt aus, wodurch der Staubbehälter in diesem Zwischenbereich leichter verformbar ist.

Weiterhin zeigt sich als Vorteil, dass eine Stützeinrichtung mit relativ wenig Materialaufwand herstellbar ist. Die Abstützung erfolgt durch den Längsabschnitt in Längsrichtung und durch den Querabschnitt in Querrichtungen quer zur Längsachse, allerdings nur am Längsendbereich, d.h. an demjenigen Bereich des Staubbehälters, der am weitesten von dem Basiskörper entfernt ist. Der Staubbehälter wird von der Stützeinrichtung also an seinem Längsendbereich sozusagen über den Querschnitt aufgespannt und bezüglich der Längsachse sozusagen auf Abstand zu dem Basiskörper gehalten

Die Stützeinrichtung, insbesondere deren Längsabschnitt, hat zwischen dem Basiskörper und dem Querabschnitt zweckmäßigerweise keinen sich über den gesamten Innenumfang des Staubbehälters erstreckenden Stützabschnitt.

Eine vorteilhafte Variante der Erfindung sieht vor, dass der Längsabschnitt im Bereich einer Wandfläche oder Innenecke der Umfangskontur des Staubbehälters angeordnet ist. Somit stützt der Längsabschnitt die Wandfläche oder Kante optimal ab. Die Kante kann selbstverständlich eine Rundung aufweisen. Beispielsweise verläuft der Längsabschnitt im Bereich einer Innenecke oder einem Inneneckbereich des Staubbehälters, wenn die Stützeinrichtung im Innenraum des Staubbehälters angeordnet ist.

Bevorzugt ist es, wenn der Längsabschnitt der Stützeinrichtung sozusagen an der beim Betrieb oder der Nutzung der Staubsammelvorrichtung dem Werkstück zugewandten Seite angeordnet ist. Erfindungsgemäß ist vorgesehen, dass der Längsabschnitt der Stützeinrichtung beim Betrieb der Handwerkzeugmaschine im Bereich einer beim Betrieb der Handwerkzeugmaschine zu einem Werkstück am nächsten liegenden Wandfläche oder Kante der Umfangskontur des Staubbehälters verläuft.

Bevorzugt ist es, wenn der Längsabschnitt der Stützeinrichtung mindestens zwei oder exakt zwei oder mindestens einen sich zwischen dem Basiskörper und dem Querabschnitt erstreckenden Längsträger aufweist. Somit ist eine äußerst schlanke und Platz sparende Konstruktion der Stützeinrichtung realisierbar.

Diese Längsträger sind vorzugsweise im Bereich von insbesondere Rundungen aufweisenden Kanten der Umfangskontur des Staubbehälters angeordnet oder verlaufen entlang derartiger Kanten.

Bevorzugt ist es, wenn die Längsträger, insbesondere exakt zwei Längsträger entlang von seitlich neben derselben Fläche des Staubbehälters vorgesehenen Kanten oder Randbereichen angeordnet sind. Bei dieser Konfiguration ist es vorteilhaft, wenn an Kanten einer dieser Fläche gegenüberliegenden Fläche des Staubbehälters keine Komponenten der Stützeinrichtung, insbesondere keine Längsträger vorhanden sind.

An dieser Stelle sei erwähnt, dass der Staubbehälter beispielsweise einen runden Querschnitt quer zur Längsachse aufweisen kann. Bevorzugt ist jedoch ein polygonaler, insbesondere im Wesentlichen rechteckiger Querschnitt des Staubbehälters quer zur Längsachse.

Eine vorteilhafte Ausführungsform sieht vor, dass die Stützeinrichtung mindestens zwei oder exakt zwei sich zwischen dem Basiskörper und dem Querabschnitt der Stützeinrichtung erstreckende Längsträger aufweist, die zwischen dem Basiskörper und dem Querabschnitt nicht miteinander verbunden sind und/oder parallel zueinander verlaufen. Ohne weiteres können aber auch noch weitere Längsträger vorgesehen sein, die derart angeordnet sind. Die nicht miteinander verbundenen und/oder parallel zueinander verlaufenden Längsträger ermöglichen eine hohe Nachgiebigkeit beispielsweise quer zur Längsachse oder im Sinne einer Torsion. Auch entlang der Längsachse können nicht miteinander verbundene Längsträger in manchen Fällen leichter verformt werden.

Zweckmäßigerweise ist vorgesehen, dass der Längsabschnitt der Stützeinrichtung, z.B. ein sich zwischen dem Basiskörper und dem Querabschnitt erstreckender Längsträger, mindestens einen Federbereich der Federanordnung aufweist, welcher in Bezug auf die Längsachse federnd verformbar ist und zwischen in Bezug auf die Längsachse im wesentlichen biegesteife und/oder gegenüber dem Federbereich biegesteifere Längsstützabschnitte aufweist. Zweckmäßigerweise hat der mindestens eine Längsträger ausschließlich einen Federbereich. Bevorzugt ist es, wenn zwei derartige Längsträger vorgesehen sind, insbesondere parallel zwischen dem Basiskörper und dem Querabschnitt verlaufend. Somit ist eine definierte Federzone geschaffen, das heißt dass der Längsträger oder die Stützeinrichtung bei dieser Ausgestaltung in dem Federbereich nachgiebig ist, außerhalb desselben jedoch nicht oder nur wenig. Die Längsstützabschnitte sind beispielsweise bezüglich der Längsachse nicht stauchbar.

Eine bevorzugte Konstruktion sieht vor, dass mindestens ein sich zwischen dem Basiskörper und dem Querabschnitt erstreckender Längsträger der Stützeinrichtung einen Federbereich mit mindestens zwei oder genau zwei quer zur Längsachse verlaufenden Federabschnitten der Federanordnung aufweist. Neben den Federabschnitten sind beispielsweise die im Wesentlichen biegesteifen Längsstützabschnitte vorgesehen, wie oben schon erläutert.

Diese Federabschnitte bilden beispielsweise eine V-förmige oder U-förmige Federstruktur. Im Bereich der Federabschnitte ist der Längsträger leichter verformbar.

Weiterhin ist es vorteilhaft, wenn der Federbereich sich ausgehend von einem Wandbereich der Umfangskontur des Staubbehälters zu einem gegenüberliegenden Wandbereich des Staubbehälters erstreckt und vorzugsweise einen Abstand zu diesem Wandbereich aufweist. Beispielsweise erstreckt sich der Federbereich von einer Innenecke oder einer Kante des Staubbehälters in Richtung einer gegenüberliegenden Innenecke oder Kante. Allerdings berührt der Federbereich diese gegenüberliegende Innenecke oder Kante nicht, sondern hat einen Abstand dazu. Der Abstand des Federbereichs von der Wand kann beispielsweise zu einer besseren Nachgiebigkeit der Staubsammelvorrichtung quer zur Längsachse in Richtung dieser Wand beitragen.

Bevorzugt ist es, wenn zwei Längsträger mit Federbereichen, insbesondere mit jeweils einem Federbereich, zwischen dem Basiskörper und dem Querabschnitt vorgesehen sind, wobei sich die Federbereiche gleichsinnig neigen können, wenn die Stützeinrichtung und/oder die Staubsammelvorrichtung als Ganzes um die Längsachse tordiert wird.

An sich möglich ist es, dass der Querabschnitt der Stützeinrichtung einen integralen Bestandteil des Staubbehälters bildet. Der Querabschnitt bildet also einen Teil des Staubbehälters, während der Längsabschnitt der Stützeinrichtung ein vom Staubbehälter separates Bauteil ist. Auch Mischformen sind möglich, bei denen beispielsweise ein Teil des Querabschnitts einen Bestandteil der Stützeinrichtung bildet, während ein anderer Teil ein integraler Bestandteil des Staubbehälters ist. So ist eine Bauform möglich, bei der beispielsweise die Stützeinrichtung einen Drahtbügel, Rahmen oder dergleichen als Teil-Querabschnitt aufweist, der einen steifen Abschnitt oder Bestandteil des Staubbehälters als anderen Teil-Querabschnitt stützt. Beide Teil-Querabschnitte zusammen stützen oder steifen den Staubbehälter an seinem vom Basiskörper entfernten Längsende aus.

Bevorzugt ist es allerdings, wenn der Querabschnitt mit dem Längsabschnitt der Stützeinrichtung einstückig oder fest verbunden ist. Bevorzugt ist der Querabschnitt eine von dem Staubbehälter lösbare oder separate Komponente.

Eine vorteilhafte Variante stellt es dar, wenn der Querabschnitt der Stützeinrichtung einen Stützbügel oder Stützrahmen bildet oder aufweist. Der Stützbügel oder Stützrahmen kann beispielsweise eine U-förmige oder V-förmige Gestalt haben.

Der Stützbügel oder Stützrahmen kann vorteilhaft zwei Längsenden zweier Längsträger der Stützeinrichtung miteinander verbinden, die sich zwischen dem Staubeinlass oder dem Basiskörper einerseits und andererseits dem Querabschnitt der Stützeinrichtung erstrecken.

Die Längsenden der Längsträger können integral und einstückig mit dem Stützbügel oder Stützrahmen sein. Bevorzugt ist es, wenn unmittelbar, beispielsweise V-förmig, in einem Verbindungsbereich miteinander verbundene oder anhand eines Grundschenkels miteinander verbundene Seitenschenkel des Stützbügels mit ihren vom Verbindungsbereich oder vom Grundschenkel am weitesten entfernten Endbereichen mit den Längsträgern verbunden sind. Besonders günstig ist es bei dieser Anordnung, wenn ansonsten keine Verbindung zwischen den Längsenden der Längsträger vorhanden ist, sodass sich diese relativ leicht zueinander hin und voneinander weg bewegen können.

Zweckmäßig ist es, dass beide Längsenden des Stützkörpers im Bereich des Staubeinlasses oder im Bereich des Längsendbereichs des Staubbehälters angeordnet sind. Dort sind die Längsenden des Stützkörpers beispielsweise anhand einer Platte oder eines Rahmenkörpers, insbesondere anhand des Basiskörpers, oder auch direkt miteinander verbunden. Der Stützkörper erstreckt sich also beispielsweise vom Basiskörper in Richtung des Längsendbereichs des Staubbehälters und von dort wieder zurück zum Basiskörper.

Eine vorteilhafte Ausgestaltung sieht vor, dass die Stützeinrichtung durch einen einzigen, insbesondere drahtförmigen, in seinem Längsverlauf zum Aufspannen des Staubsammelraums zu einer dreidimensionalen Struktur umgeformten Stützkörper oder Stützdraht gebildet ist. Der Stützkörper könnte beispielsweise auch ein Kunststoffbauteil sein, insbesondere ein ganz oder über Teilabschnitte stabförmiges Kunststoffbauteil. Der Stützkörper erstreckt sich also beispielsweise ausgehend vom Basiskörper mit zwei Längsträgern in Richtung des Querabschnitts, wobei die Längsträger zwischen dem Basiskörper und dem Querabschnitt bevorzugt die oben erläuterten Federbereiche, insbesondere die V-förmige oder U-förmige Struktur, aufweisen und mit ihren vom Basiskörper am weitesten entfernten Längsendbereichen unmittelbar in den Querabschnitt übergehen. Dieser Querabschnitt ist bevorzugt ebenfalls U-förmig oder V-förmig, d.h. dass die Längsendbereiche der Längsträger unmittelbar in Seitenschenkel des Querabschnitts übergehen, die direkt oder anhand eines Grundschenkels im Abstand von den Längsendbereichen der Längsträger miteinander verbunden sind.

Bevorzugte Maßnahmen sehen weiterhin eine vorteilhafte Ausgestaltung der steifen und weniger steifen Zonen der Stützeinrichtung vor.

Es ist zum Beispiel zweckmäßig, wenn eine Biegesteifigkeit der Stützeinrichtung in Richtung der Längsachse höher, insbesondere mindestens zweimal oder dreimal oder viermal höher, als eine Biegesteifigkeit der Stützeinrichtung quer zu der Längsachse oder als eine Torsionsfestigkeit um die Längsachse ist. Somit kann der Staubbehälter in Richtung der Längsachse nur relativ schwer verformt werden, sodass der Staubsammelraum seine möglichst große Sammelkapazität für Partikel und Staub beibehält. Quer zur Längsachse hingegen, wo die Staubsammelvorrichtung beispielsweise an einem Werkstück anstoßen kann, ist jedoch eine höhere Nachgiebigkeit oder Beweglichkeit gegeben. Auch eine Beweglichkeit zur Seite, beispielsweise im Sinne einer Torsion, ist auf diesem Wege höher.

Die elastische Nachgiebigkeit der Staubsammelvorrichtung, beispielsweise durch Anordnung oder Ausgestaltung der Stützeinrichtung oder die Ausgestaltung und Einordnung des Staubbeutels, ist zweckmäßigerweise quer zur Längsachse asymmetrisch groß, so dass die Staubsammelvorrichtung in Richtung eines durch die Hand-Werkzeugmaschine zu bearbeitenden Werkstücks weniger nachgiebig als von dem Werkstück weg ist. Die Staubsammelvorrichtung gibt also nach, wenn sie an das Werkstück anstößt. In Gegenrichtung, das heißt üblicherweise nach unten, ist die Staubsammelvorrichtung jedoch wesentlich steifer. Wenn also der Staubsammelraum mit Partikeln gefüllt ist, also relativ schwer, gibt die Staubsammelvorrichtung nicht oder jedenfalls weniger nach, als bei einer Belastung durch beispielsweise das Werkstück von unten her.

Eine vorteilhafte Ausgestaltung sieht vor, dass die Stützeinrichtung fest, beispielsweise anhand von Laschen, Klammern oder dergleichen, oder lose in einem Innenraum, beispielsweise dem Staubsammelraum, des Staubbehälters angeordnet ist.

Der Staubsammelbehälter weist zweckmäßigerweise mindestens eine luftdurchlässige Wand auf, durch die Luft aus dem Staubsammelraum nach außen entweichen kann. Weiterhin ist es vorteilhaft, wenn keine sich von dem Basiskörper zu dem Querabschnitt erstreckende Komponente der Stützeinrichtung an einer bei Gebrauch der Staubsammelvorrichtung zu einem Werkstück entgegengesetzten Wandfläche anliegt. Dies kann dazu beitragen, dass die Staubsammelvorrichtung in einer Richtung vom Werkstück weg leichter verformbar ist.

Eine bevorzugte Ausgestaltung der Erfindung sieht vor, dass der Staubeinlass an einem Deckel angeordnet ist, der zwischen einer eine zum Entleeren des Staubsammelraums vorgesehene Einlassöffnung der Staubsammelvorrichtung freigebenden Offenstellung und einer die Einlassöffnung verschließenden Schließstellung verstellbar ist.

Der Deckel dient also dazu, die Einlassöffnung der Staubsammelvorrichtung zu verschließen, sodass der Staubsammelraum abgesehen von dem Staubeinlass verschlossen ist. Der Deckel kann aber leicht entfernt werden, um den Staubsammelraum zu entleeren. Die Staubsammelvorrichtung ist dadurch leicht handhabbar und für längere Betriebseinsätze geeignet.

Die Einlassöffnung ist beispielsweise am Staubbehälter vorgesehen. Die Einlassöffnung kann auch einen Bestandteil der Anschlussvorrichtung bilden.

Der Deckel ist von dem Basiskörper beispielsweise lösbar entfernbar. Es ist auch möglich, dass der Deckel anhand eines Lagers, zum Beispiel eines Schwenklagers, eines Schiebelagers oder dergleichen, an dem Basiskörper der Anschlusseinrichtung beweglich gelagert ist. Eine Kombination ist möglich, d.h. dass beispielsweise das Lager ein Lager ist, welches voneinander entfernbare Komponenten aufweist, beispielsweise eine U-förmige Lageraufnahme, in welche ein Lagerbolzen eingreift, jedoch aus der Lageraufnahme quer zur Schwenkachse entnehmbar ist.

Eine bevorzugte Ausführungsform sieht vor, dass an dem Basiskörper und dem Deckel Befestigungsmittel zur lösbaren Befestigung des Deckels an dem Basiskörper vorgesehen sind. So kann der Deckel vom Basiskörper ganz entfernt werden und beispielsweise mit dem Basiskörper verrastet, verklemmt oder dergleichen anderweitig befestigt werden. Es ist auch möglich, dass der Deckel in der Schließstellung anhand der Befestigungsmittel fixierbar ist. Beispielsweise schwenkt der Deckel anhand des bereits erwähnten Lagers zwischen der Offenstellung und der Schließstellung und kann in der Schließstellung am dem Basiskörper anhand der Befestigungsmittel ortsfest festgelegt werden.

Die Befestigungsmittel umfassen beispielsweise Rastmittel oder Klemmmittel oder beides.

Die Befestigungsmittel umfassen zweckmäßigerweise mindestens einen Haken und eine Hakenaufnahme zur Aufnahme des Hakens. Zweckmäßigerweise ist der Haken am Deckel, die Hakenaufnahme am Basiskörper vorgesehen. Es ist aber auch umgekehrt möglich, dass beispielsweise am Basiskörper ein Haken vorhanden ist, der in eine Hakenaufnahme des Deckels eingreift.

Weiterhin ist es vorteilhaft, wenn alternativ oder ergänzend zu dem Haken ein Rastvorsprung und eine Rastaufnahme zur Aufnahme des Rastvorsprungs vorgesehen sind. Auch hier ist es möglich, den Rastvorsprung wahlweise am Deckel oder am Basiskörper und die Rastaufnahme entsprechend am Basiskörper und dem Deckel vorzusehen. Weiterhin ist eine Kombination möglich, d.h. dass beispielsweise der bereits erwähnte Haken als ein Rastvorsprung oder ein federndes Bauteil ausgestaltet ist.

Die Befestigungsmittel können auch alternativ oder ergänzend zu der Verrastung oder der Verhakung, die schon erwähnt worden sind, mindestens eine Klemme und eine zugeordnete Klemmfläche für die Klemme umfassen. Mithin ist es also auch möglich, dass der Deckel mit dem Basiskörper verklemmt wird.

Schließlich ist es auch möglich, dass der Deckel durch eine den Maschinen-Staubauslass aufweisende Komponente oder den später noch erläuterten Adapter in der Schließstellung gehalten wird.

Bevorzugt ist es, dass der Deckel in Bezug auf den Basiskörper so belastbar oder verformbar ist, dass ein sich in dem Staubsammelraum aufbauender Druck aufgrund des Partikelstroms den Deckel insgesamt und/oder den Deckel an dem Basiskörper haltende Befestigungsmittel, beispielsweise der vorgenannte Haken und die Hakenaufnahme, in Richtung einer den Deckel an dem Basiskörper fixierenden Befestigungsstellung belastet. Beispielsweise wird der Deckel durch den Partikelstrom aufgebläht, gebogen oder dergleichen, so dass ein formschlüssiger Eingriff der Befestigungsmittel ineinander noch verstärkt wird. Es ist auch möglich, dass das bereits erwähnte Lager ein gewisses Spiel hat, welches bei Belastung durch den Partikelstrom dafür sorgt, dass sich der Deckel in einen besonders festen Sitz bezüglich des Basiskörpers verformt und/oder bewegt.

Zweckmäßig ist es, dass an dem Staubeinlass ein Ventilkörper zum Verschließen des Staubeinlasses angeordnet ist. Der Ventilkörper ist beispielsweise als eine Rückschlagklappe ausgestaltet. Der Ventilkörper nimmt vorzugsweise im unbelasteten Zustand eine Verschlussstellung ein. Bevorzugt ist der Ventilkörper als eine Rückschlagklappe ausgestaltet. Wenn also beispielsweise Partikelstrom, Staub oder dergleichen aus dem Staubsammelraum auf den Ventilkörper einwirkt, verschließt dieser den Staubeinlass. Der Ventilkörper hat zweckmäßigerweise eine wandartige Gestalt.

Bevorzugt ist es, wenn der Ventilkörper durch den Partikelstrom und/oder durch den mit dem Staubeinlass verbundenen Maschinen-Staubauslass zum Öffnen des Staubeinlasses betätigbar ist. Beispielsweise ist der Maschinen-Staubauslass in eine Steckaufnahme des Deckels eingesteckt und betätigt dadurch den Ventilkörper in Richtung der Offenstellung. Es ist auch möglich, dass der Partikelstrom, der aus dem Maschinen-Staubauslass beim Betrieb ausströmt, die Ventilklappe oder den Ventilkörper sozusagen in die Offenstellung treibt.

Eine bevorzugte Ausgestaltung sieht vor, dass der Deckel als ein Formkörper aus einem elastischen Material ausgestaltet ist. Das elastische Material ist Beispielweise Kunststoff, Gummi oder dergleichen.

Der Deckel hat zweckmäßigerweise einen plattenartigen Deckelgrundkörper.

Bevorzugt hat der Deckel einen Deckelgrundkörper, der den Staubeinlass aufweist und einstückig mindestens ein Lagerelement zum beweglichen Lagern an dem Basiskörper. Einstückig mit diesem Deckelgrundkörper, der den Staubeinlass hat, kann aber auch eine andere Komponente sein, beispielsweise mindestens ein Befestigungsmittel, zum Beispiel der vorgenannte Hakenvorsprung oder Rastvorsprung, eine Hakenaufnahme oder eine Rastaufnahme, zum Befestigen an dem Basiskörper. Ferner ist es möglich, dass an dem Deckelgrundkörper alternativ oder ergänzend zu den vorgenannten Komponenten auch ein Ventilkörper zum Verschließen des Staubeinlasses vorhanden ist, beispielsweise der bereits erwähnte Ventilkörper oder die Rückschlagklappe. Der Deckel ist also beispielsweise als ein Gummibauteil oder Kunststoffbauteil ausgestaltet, welches integral vorzugsweise den Ventilkörper, Lagerelemente, beispielsweise Lagerbolzen oder Lagervorsprünge und zweckmäßigerweise auch mindestens eines der genannten Befestigungsmittel aufweist.

Eine zweckmäßige Ausgestaltung sieht vor, dass die durch den Deckel verschließbare Einlassöffnung an dem Basiskörper angeordnet ist. Der Basiskörper bildet zweckmäßigerweise einen Träger oder ein Anschlusselement für den Staubbehälter.

An dem Basiskörper und/oder dem Deckel sind zweckmäßigerweise mindestens ein Dichtvorsprung und/oder eine Dichtungsaufnahme angeordnet. Beispielsweise ist an dem Basiskörper eine vorspringende Dichtungskontur vorgesehen, in welche der Deckel eingreift oder an welcher der Deckel anliegt. Der Deckel umfasst zweckmäßigerweise im Bereich der Dichtungsaufnahme oder dem Dichtungsvorsprung ein elastisches Kunststoffmaterial oder Gummi oder ist dadurch gebildet, sodass er dicht an dem Dichtvorsprung oder der Dichtungsaufnahme anliegen kann. Selbstverständlich ist es möglich, dass an dem Grundkörper des Deckels integral und/oder einstückig ein Dichtvorsprung oder eine Dichtungsaufnahme vorhanden sind, insbesondere dann, wenn dieser Grundkörper aus elastischem Kunststoff oder Gummi besteht.

Der Staubeinlass an dem Deckel kann wie folgt ausgestaltet sein:
Vorzugsweise ist vorgesehen, dass eine zum Einstecken des Maschinen-Staubauslasses vorgesehene Steckaufnahme des Deckels einen Aufnahmetrichter für den Maschinen-Staubauslass aufweist. Somit findet der Maschinen-Staubauslass sozusagen von selbst zum Staubeinlass der Staubsammelvorrichtung.

Weiterhin ist es zweckmäßig, wenn die Steckaufnahme eine stirnseitige, sich um den Staubeinlass erstreckende Bodenfläche aufweist, die zur Anlage einer Stirnseite eines den Maschinen-Staubauslass aufweisenden oder mit dem Maschinen-Staubauslass kommunizierenden Staubauslasskörpers vorgesehen ist. An der Bodenfläche kann der Staubauslasskörper insbesondere dicht anliegen. Die Bodenfläche weist zweckmäßigerweise eine Dichtkontur oder eine Dichtfläche auf. Beispielsweise hat die Bodenfläche eine Beschichtung aus Gummi oder besteht aus Gummi oder einem Gummi entsprechenden elastischen Kunststoff.

Eine an sich eigenständige Erfindung in der Verbindung mit den oberbegrifflichen Merkmalen des Anspruchs 1 stellt die folgende Maßnahme dar. Diese Maßnahme kann aber auch eine zweckmäßige Weiterbildung der bereits erläuterten Erfindung sein.

Es ist vorteilhaft vorgesehen, dass die Anschlusseinrichtung mindestens ein Riegelelement, insbesondere ein Hakenelement, zum Verriegeln, insbesondere Verhaken, mit einer bezüglich des Maschinen-Staubauslasses ortsfest festgelegten oder festlegbaren Gegenkontur, insbesondere einer Riegelaufnahme oder Hakenaufnahme, aufweist, wobei das mindestens eine Riegelelement bezüglich des Basiskörpers beweglich, insbesondere schwenkbar oder drehbar, zwischen einer Befestigungsposition, bei der das Riegelelement in Eingriff mit der Gegenkontur ist, und einer Lösestellung gelagert ist, in der das Riegelelement außer Eingriff mit der Gegenkontur ist.

Die mindestens eine Gegenkontur kann beispielsweise an der Hand-Werkzeugmaschine selbst oder dem nachfolgend noch erläuterten Adapter vorgesehen sein. Somit kann der Maschinen-Staubauslass bequem mit dem Staubeinlass der Staubsammelvorrichtung in Strömungsverbindung gebracht werden und durch das mindestens eine relativ zum Staubeinlass bewegliche Riegelelement fest mit der Staubsammelvorrichtung verbunden werden. Bevorzugt ist eine Montage möglich, bei der zunächst im Rahmen einer Steckbewegung der Maschinen-Staubauslass und der Staubeinlass zueinander hin bewegt werden und anschließend durch die Betätigung des mindestens einen Riegelelements zugfest in Bezug auf die Steckachse festgelegt sind. Mithin ist es vorteilhaft, wenn das Riegelelement quer zu der Steckachse schwenkbar bezüglich des Basiskörpers gelagert ist.

Konstruktiv kann es vorgesehen sein, dass der Maschinen-Staubauslass und der Staubeinlass nicht formschlüssig aneinander anliegen, d.h. dass der Halt der Staubsammelvorrichtung an der Hand-Werkzeugmaschine ausschließlich oder im Wesentlichen durch das mindestens eine Riegelelement gewährleistet ist.

Gerade bei einer derartigen Ausgangssituation ist die nachfolgende Maßnahme vorteilhaft, bei der vorgesehen ist, das die Staubsammelvorrichtung mindestens zwei oder exakt zwei bezüglich des Basiskörpers beweglich gelagerte Riegelelemente zum Eingriff in den Riegelelementen zugeordnete Gegenkonturen aufweist, wobei die Riegelelemente zu einem klammerartigen oder zangenartigen Halten an den Gegenkonturen an einander entgegengesetzten Seiten des Basiskörpers angeordnet sind. Somit können die Riegelelemente klammerartig oder zangenartig die Gegenkonturen, die beispielsweise an dem Adapter, der später noch erwähnt wird, oder an der Hand-Werkzeugmaschine selbst vorhanden sind, greifen. Die Riegelelemente sind bei dieser Konfiguration zweckmäßigerweise quer zur Strömungsrichtung des Partikelstroms in den Staubeinlass hinein schwenkbar am Basiskörper oder bezüglich des Basiskörpers gelagert.

Bevorzugt ist vorgesehen, dass an dem Deckel eine Steckaufnahme für einen Staubauslasskörper, der mit dem Maschinen-Staubauslass kommuniziert oder diesen aufweist, und/oder einen Steckvorsprung zum Einstecken in eine mit dem Maschinen-Staubauslass kommunizierende oder diesen aufweisende Steckaufnahme aufweist. Der Deckel kann also eine Steckaufnahme oder einen Steckvorsprung aufweisen. Die Steckaufnahme oder der Steckvorsprung sind zweckmäßigerweise zu einem formschlüssigen Halten eines den Maschinen-Staubauslass aufweisenden Auslasskörpers geeignet. Es ist aber auch die trichterförmige Ausgestaltung der Steckaufnahme gemäß der Zeichnung ohne weiteres möglich.

Die Kompatibilität der Staubsammelvorrichtung mit verschieden ausgestalteten Handwerkzeugmaschinen, insbesondere deren jeweiligen Maschinen-Staubauslässen verbessert der nachfolgend erläuterte Adapter. Der Adapter bildet zweckmäßigerweise einen Systembestandteil der Staubsammelvorrichtung oder anders formuliert bilden die Staubsammelvorrichtung und der Adapter ein System.

Bevorzugt ist vorgesehen, dass die Staubsammelvorrichtung einen Adapter für einen mit dem Staubeinlass nicht geometrisch kompatiblen Maschinen-Staubauslass aufweist, wobei die Staubsammelvorrichtung Haltemittel zum ortsfesten Halten des Adapters bezüglich des Basiskörpers aufweist, wobei der Adapter einen Verbindungskörper zur Herstellung einer Strömungsverbindung zwischen dem Maschinen-Staubauslass und dem Staubeinlass aufweist, der einen insbesondere eine Steckhalterung für den Maschinen-Staubauslass aufweisenden und geometrisch mit dem Maschinen-Staubauslass kompatiblen Adapter-Staubeinlass aufweist, wobei der Verbindungskörper mit dem Staubeinlass im wesentlichen strömungsdicht verbunden ist, wenn der Adapter anhand der Haltemittel ortsfest bezüglich des Basiskörpers gehalten ist. Die Strömungsdichtigkeit kann zum Beispiel dadurch hergestellt werden, dass eine Grundplatte des Adapters dicht an dem Basiskörper der Anschlusseinrichtung der Staubsammelvorrichtung anliegt. Zweckmäßig ist es, wenn die Steckhalterung für den Maschinen-Staubauslass, zum Beispiel eine Steckaufnahme oder ein Steckvorsprung, zum formschlüssigen Halten und Aufnehmen des Maschinen-Staubauslasses geeignet ist. Beispielsweise ist dieser als ein Rohrelement ausgestaltet, welches formschlüssig in der Steckaufnahme des Adapter-Staubeinlasses aufgenommen werden kann.

Wie oben bereits angedeutet, eignet sich das mindestens eine Riegelelement oder Hakenelement zu einer Befestigung des Adapters. Bevorzugt ist vorgesehen, dass die Haltemittel mindestens ein Riegelelement, insbesondere ein Hakenelement, zum Verriegeln, insbesondere Verhaken, mit einer an dem Adapter angeordneten Gegenkontur, insbesondere einer Riegelaufnahme oder Hakenaufnahme, aufweisen, wobei das mindestens eine Riegelelement bezüglich des Basiskörpers beweglich, insbesondere schwenkbar und/oder drehbar, zwischen einer Befestigungsposition, bei der das Riegelelement in Eingriff mit der Gegenkontur ist, und einer Lösestellung gelagert ist, in der das Riegelelement außer Eingriff mit der Gegenkontur ist. Erwähnt sei wiederum, dass durchaus mehrere Riegelelemente vorgesehen sein können, zum Beispiel zangenartig angeordnete Riegelelemente, die den Adapter, insbesondere dessen Grundplatte, voneinander entgegengesetzten Seiten her ergreifen können.

Mindestens eine Wand, vorzugsweise mehrere oder alle Wände des Staubbehälters sind luftdurchlässig. Der Staubbehälter kann aber auch mindestens eine nicht luftdurchlässige Wand haben. Der Staubbehälter kann beispielsweise aus Textilmaterial (insbesondere Baumwolle), Vlies, Papier oder dergleichen bestehende Wände haben, auch in Kombination oder als Mehrkomponentenstoffe oder mehrschichtige Wände.

Vorteilhaft ist vorgesehen, dass der Staubbehälter lösbar an der Stützeinrichtung befestigbar ist oder die Stützeinrichtung lose aufnimmt und der Staubbehälter von der Stützeinrichtung gehalten wird. Somit kann der Staubbehälter bei Nichtgebrauch oder Verschleiß leicht ausgewechselt werden, während die Stützeinrichtung für die weitere Verwendung noch immer zur Verfügung steht.

Bevorzugt ist, dass der Staubbehälter einen Überzug über die Stützeinrichtung bildet.

Zweckmäßigerweise ist die Stützeinrichtung in einem Innenraum und/oder dem Staubsammelraum, angeordnet.

Dennoch ist es beispielsweise auch möglich, was in der Zeichnung nicht dargestellt ist, dass der Staubbehälter in einem Innenraum der Stützeinrichtung angeordnet ist. Der Staubbehälter kann beispielsweise anhand von Halteklipsen, Rastverbindungen, Klettbändern oder dergleichen lösbar an der Stützeinrichtung befestigt sein. Es ist auch möglich, dass Steckverbindungen zwischen einerseits dem Staubbehälter und andererseits der Stützeinrichtung vorgesehen sind.

Der Staubbehälter und/oder der Staubsammelraum haben bezüglich der Längsachse vorteilhaft im Wesentlichen denselben Innenquerschnitt.

Der Staubbehälter hat zweckmäßigerweise eine schlauchartige Gestalt oder ist als Schlauch ausgestaltet.

Zweckmäßigerweise wird der Staubbehälter an dem Basiskörper durch eine Haltemanschette gehalten.

An dem Basiskörper und/oder an dem Deckel kann eine Steckaufnahme zum Einstecken des Maschinen-Staubauslasses bzw. eines Staubauslasskörpers des Maschinen-Staubauslasses vorgesehen sein. Alternativ denkbar ist es aber auch, dass der Basiskörper oder der Deckel einen Steckvorsprung mit dem Staubeinlass aufweist, wobei der Steckvorsprung in eine entsprechende Steckaufnahme des Maschinen-Staubauslasses einsteckbar ist.

Die Erfindung betrifft weiterhin eine Hand-Werkzeugmaschine, die mit einer Staubsammelvorrichtung gemäß obiger Beschreibung ausgestattet ist.

Die Hand-Werkzeugmaschine, beispielsweise eine Schleifmaschine, Fräsmaschine oder dergleichen, hat beispielsweise eine elektrischen oder pneumatischen Antriebsmotor zum Antreiben, insbesondere Drehantreiben einer Werkzeugaufnahme, direkt oder über ein Getriebe zwischen dem Antriebsmotor und der Werkzeugaufnahme.

Nachfolgend wird ein Ausführungsbeispiel der Erfindung anhand der Zeichnung erläutert. Es zeigen:
- Figur 1: eine Seitenansicht einer Hand-Werkzeugmaschine mit einer Staubsammelvorrichtung,
- Figur 2: ein Detail D1 aus Figur 1,
- Figur 3: eine Schnittdarstellung eines Verbindungsbereichs zwischen der Hand-Werkzeugmaschine und der Staubsammelvorrichtung etwa entlang einer Schnittlinie A-A in Figur 1,
- Figur 4: die Ansicht etwa entsprechend Figur 3, wobei jedoch die Staubsammelvorrichtung von der Hand-Werkzeugmaschine entfernt ist,
- Figur 5: eine perspektivische Schrägansicht der Staubsammelvorrichtung und einem Adapter für den Staubsammelbehälter zur Anbringung an einer Hand-Werkzeugmaschine eines anderen Typs,
- Figur 6: die Schrägansicht des Staubsammelbehälters mit Adapter entsprechend Figur 5, wobei jedoch der Adapter am Staubsammelbehälter angeordnet ist,
- Figur 7: einen Längsschnitt durch die Staubsammelvorrichtung und den Adapter gemäß Figur 6, etwa entlang einer Schnittlinie B-B in Figur 6,
- Figur 8: die Staubsammelvorrichtung perspektivisch schräg wobei ein Staubbehälter entfernt ist, sodass eine den Staubbehälter stützende Stützeinrichtung in einer Grundstellung und einer ersten Verformungsstellung sichtbar ist,
- Figur 9: die Staubsammelvorrichtung entsprechend Figur 8, wobei die Stützeinrichtung in einer zweiten Verformungsstellung dargestellt ist,
- Figur 10: eine Abwandlung der Staubsammelvorrichtung gemäß Figuren 7-9, bei der die Stützeinrichtung in einer anderen Winkelposition bezüglich einer Längsachse des Staubbehälters in dem Staubbehälter angeordnet ist,
- Figur 11: eine perspektivische Schrägansicht eines hinteren Teils der Handwerkzeugmaschine gemäß Figur 1 mit dem Maschinen-Staubauslass,
- Figur 12: eine perspektivische Schrägansicht eines vorderen Teils der Staubsammelvorrichtung mit dem Staubeinlass,
- Figur 13: eine Ansicht ähnlich wie Figur 12, wobei jedoch ein Deckel der Staubsammelvorrichtung geöffnet ist,
- Figur 14: eine perspektivische Schrägansicht des Deckels der Staubsammelvorrichtung,
- Figur 15: einen Längsschnitt durch die Staubsammelvorrichtung gemäß Figur 12, etwa entlang einer Schnittlinie C-C in Figur 13, und
- Figur 16: einen Längsschnitt durch die Staubsammelvorrichtung gemäß Figur 13 etwa entlang der Schnittlinie C-C.

Eine Hand-Werkzeugmaschine 10 hat einen in einem Gehäuse 11 angeordneten Antriebsmotor 12, beispielsweise elektrischen Antriebsmotor oder einen pneumatischen Antriebsmotor, zum anderen eines Bearbeitungswerkzeugs 14, beispielsweise Schleifwerkzeugs, Sägewerkzeug, Fräswerkzeugs oder dergleichen. Im vorliegenden Fall ist die Hand-Werkzeugmaschine 10 beispielsweise eine Schleifmaschine, das Bearbeitungswerkzeug 14 ein Schleifwerkzeug.

Eine Werkzeugaufnahme 24 kann vom Antriebsmotor 12 direkt oder über ein Getriebe 13 angetrieben werden. Der Antriebstrang umfassend den Antriebsmotor 12, optional das Getriebe 13 sowie die Werkzeugaufnahme 24 ist in einem Motorgehäuseteil 17 des Gehäuses 11 angeordnet, an welchem sich ein Maschinen-Staubauslass 18 zum Auslassen eines Partikelstroms S, die bei der Bearbeitung eines Werkstücks W mit dem Bearbeitungswerkzeug 14 entsteht, befindet.

Ein Bediener kann die Hand-Werkzeugmaschine an einem Handgriff 22 bequem ergreifen. Der Handgriff 22 befindet sich beispielsweise an einer von der Werkzeugaufnahme 24 abgewandten, insbesondere entgegengesetzten, Seite des Gehäuses 11.

An einer Bearbeitungsseite 15 des Bearbeitungswerkzeugs 14, beispielsweise einer Schleiffläche, sind Durchlassöffnungen 16 für den Partikelstrom S vorhanden, die in Richtung des Staubauslasses 18 strömt.

Der Staubauslass 18 umfasst beispielsweise einen rohrförmigen Staubauslasskörper 19. Der Staubauslasskörper 19 hat an seinem Außenumfang beispielsweise Widerhaltstrukturen 20, insbesondere eine beispielsweise ringförmige Riffelung, die einen Halt einer Staubabfuhreinrichtung oder eines Staubsammelbehälters verbessert. Im Innern des Staubauslasses 18 ist ein Strömungskanal 21 für den Partikelstrom S vorhanden.

Die Hand-Werkzeugmaschine 10 ist äußerst kompakt. So steht beispielsweise eine Unterseite 23 in Richtung des Staubauslasses 18 vor und hat zu diesem einen relativ kleinen Abstand.

Der Partikelstrom S enthält Staub-Partikel P, die beispielsweise für einen Nutzer der Hand-Werkzeugmaschine 10 unangenehm sind und/oder die Oberfläche des Werkstücks W verschmutzen. Insbesondere kann es bei mangelhafter Abfuhr der Partikelstrom S dazu kommen, dass das Bearbeitungswerkzeug 14 die Oberfläche des Werkstücks W durch die Staub-Partikel P beschädigt. Hier schafft die effektive Staubabfuhr der Hand-Werkzeugmaschine 10 zusammen mit einer Staubsammelvorrichtung 30 Abhilfe.

Die Staubsammelvorrichtung 30 kann anhand einer Anschlusseinrichtung 31 an den Maschinen-Staubauslass 18 angeschlossen werden.

Die Staubsammelvorrichtung 30 weist einen Staubbehälter 40 auf, in welchen der Partikelstrom S einströmen kann. Der Staubbehälter 40 erstreckt sich von einem Basiskörper 32 der Staubsammelvorrichtung 30 entlang einer Längsachse L bis zu einem Längsendbereich 76, sodass sich ein Staubsammelraum 75 der Staubsammelvorrichtung 30 vom Basiskörper 32 bis zu dem Längsendbereich 76 erstreckt.

An dem Basiskörper 32 ist eine Einlassöffnung 34 vorgesehen, durch die der Partikelstrom S in den Staubsammelraum 75 einströmen kann. Eine lichte Weite der Einlassöffnung 34 ist so bemessen, dass in dem Staubsammelraum 75 befindliche Partikel P bequem entsorgt werden können, d.h. dass bei geöffneter Einlassöffnung 34 diese Partikel P ohne weiteres aus dem Staubsammelraum 75 in beispielsweise einen Abfallbehälter (nicht dargestellt) entsorgt werden können. Dies trägt dazu bei, dass die Handhabung der Staubsammelvorrichtung 30 einfach ist.

Der Staubbehälter 40 weist eine Umfangswand 41 auf sowie eine hintere Stirnwand 42, die dem Basiskörper 32 gegenüberliegt. Die Umfangswand 41 hat beispielsweise eine im Wesentlichen rechteckige Außenkontur und dementsprechend einen im Wesentlichen rechteckigen Innenquerschnitt 43 und einen ebenfalls im Wesentlichen rechteckigen äußeren Umfang 44.

Der Staubbehälter 40 kann mit einer Abdeckung 240 versehen sein, beispielsweise einem Deckel. Die Abdeckung 240 ist beispielsweise in der Art einer Schutzkappe ausgestaltet, die mit einer Umfangswand 241 an der Umfangswand 41 anliegt.

Der Umfang 44 und der Innenquerschnitt 43 sind über die gesamte Länge des Staubbehälters 40 im Wesentlichen gleich, beispielsweise flach-rechteckig. Der Staubbehälter 40 hat nämlich eine schlauchartige Gestalt und bildet insbesondere einen Kubus aus.

Die Umfangswand 41 weist bei Gebrauch der Staubsammelvorrichtung 30 untere, beispielsweise dem Werkstück W zugewandte, Längskanten 45 auf, denen Längskanten 46 gegenüberliegen. Die Längskanten 45 sind zwischen einer Bodenwand 47 und Seitenwänden 48, die Längskanten 46 zwischen den Seitenwänden 48 und einer Deckwand 49 vorgesehen. Die Umfangswand 41 und die hintere Stirnwand 42 sind vorzugsweise einstückig oder jedenfalls dicht miteinander verbunden, so dass Partikel P in dem Staubsammelraum 75 zur Rück gehalten werden.

Die Umfangswand 41 und/oder die Stirnwand 42 sind vorzugsweise aus einem luftdurchlässigen Material, insbesondere aus einem flexiblen Material, zum Beispiel einem Filtervlies, Filterpapier oder dergleichen. Zwar sind die Umfangswand 41 und/oder die Stirnwand 42 luftdurchlässig, jedoch für die Partikel P undurchlässig, d.h. sie halten Partikel P im Staubsammelraum 75 zurück.

Der Basiskörper 32 umfasst einen Rahmenkörper 35, an welchem die Einlassöffnung 34 angeordnet ist. Am Rahmenkörper 35 ist ein Halterahmen 36 zum Halten der Umfangswand 41 des Staubbehälters 40 vorgesehen. Der Halterahmen 36 steht beispielsweise vom Rahmenkörper 35 in Richtung des Staubsammelraums 75 ab. Beispielsweise ist die Umfangswand 41 an eine Haltefläche 37 des Halterahmens 36 angeklebt. Die Haltefläche 37 ist beispielsweise am Außenumfang des Halterahmens 36 vorgesehen, könnte aber selbstverständlich auch am Innenumfang vorgesehen sein. Weiterhin wäre es möglich, den Staubbehälter 40 mit dem Rahmenkörper 35 zu verklemmen, beispielsweise anhand eines Klemmrahmens, der am Außenumfang oder Innenumfang des Halterahmens 36 angebracht sein könnte, um die Umfangswand 41 zwischen den Halterahmen 36 und den Klemmrahmen zu klemmen.

Der Staubbehälter 40 wird durch eine Stützeinrichtung 60 aufgespannt und in Lage gehalten. Die Stützeinrichtung 60 ist im Innenraum des Staubbehälters 40, also im Staubsammelraum 75 angeordnet. Die Stützeinrichtung 60 umfasst einen Längsabschnitt 61, der sich zwischen dem Basiskörper 32 und dem Längsendbereich 76 erstreckt, sowie einen Querabschnitt 62, der der hinteren Stirnwand 42 zugeordnet ist und diese sozusagen aufspannt.

Die Stützeinrichtung 60 ist als einteiliges Bauteil ausgestaltet, das aus einem einzigen Stützkörper 63 gebildet ist. Der Stützkörper 63 ist beispielsweise ein Draht, insbesondere aus Federstahl, könnte aber ohne weiteres auch ein Kunststoffbauteil sein, welches die unten dargestellte Form hat. Der Stützdraht oder Draht des Stützkörpers 63 ist beispielsweise durch eine Umformung hergestellt. Es ist aber auch möglich, dass der Stützkörper 63 als Spritzbauteil oder anderweitig geformtes Kunststoffbauteil ausgestaltet ist.

Der Querabschnitt 62 umfasst einen Stützbügel 64 mit einem Grundschenkel 65, von dem Seitenschenkel 66 abstehen. Der Stützbügel 64 hat eine im Wesentlichen U-förmige Gestalt. Die Seitenschenkel 66 und der Grundschenkel 65 überdecken im Wesentlichen den gesamten Innenquerschnitt 43 des Staubbehälters 40 im Bereich der Stirnwand 42, so dass diese durch den Stützbügel 64, mithin also den Querabschnitt 62 aufgespannt und in Lage gehalten wird.

Die Seitenschenkel 66 sind nur durch den Grundschenkel 65 unmittelbar miteinander verbunden. Die von dem Grundschenkel 65 entfernten Endbereiche der Seitenschenkel 66 gehen in Längsträger 67 des Längsabschnitts 61 über, welche sich zwischen dem Basiskörper 32 erstrecken. Die Längsträger 67 sorgen dafür, dass der Staubbehälter 40 in Bezug auf die Längsachse L aufgespannt und gestreckt gehalten wird. Allerdings sind die Längsträger 67 federnd nachgiebig, was nachfolgend noch deutlich wird.

Die Längsträger 67 weisen nämlich Längsstützabschnitte 68, 69 auf, zwischen denen Federbereiche 74 vorgesehen sind. Die Federbereiche 74 bilden einzelnen oder insgesamt eine Federanordnung 70. Die Federbereiche 74 umfassen Federabschnitte 71 des Stützkörpers 63, die V-förmig zueinander angeordnet sind und an einem Längsendbereich über einen Bogenabschnitt 72 miteinander verbunden sind, während die anderen Längsendbereiche der Federabschnitte 71 mit den Längsstützabschnitten 68, 69 verbunden sind und mit Bogenabschnitten 73 in diese übergehen.

Die von den Federbereichen 74 entfernten Längsendbereiche der Längsstützabschnitte 68 sind an dem Basiskörper 32 abgestützt. Beispielsweise sind sie in das Grundmaterial des Basiskörpers 32 eingebettet oder in dort vorgesehene Steckaufnahmen eingesteckt. Somit stützen sich die Längsträger 67 sozusagen stirnseitig oder mit ihren vom Querabschnitt 62 entfernten Längsbereichen am Basiskörper 61 ab.

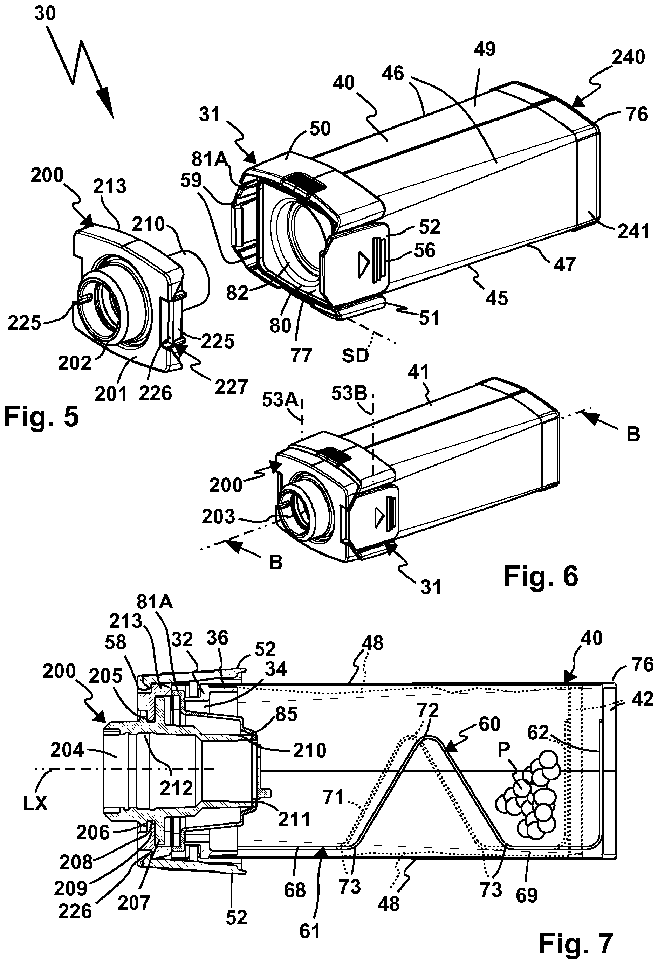

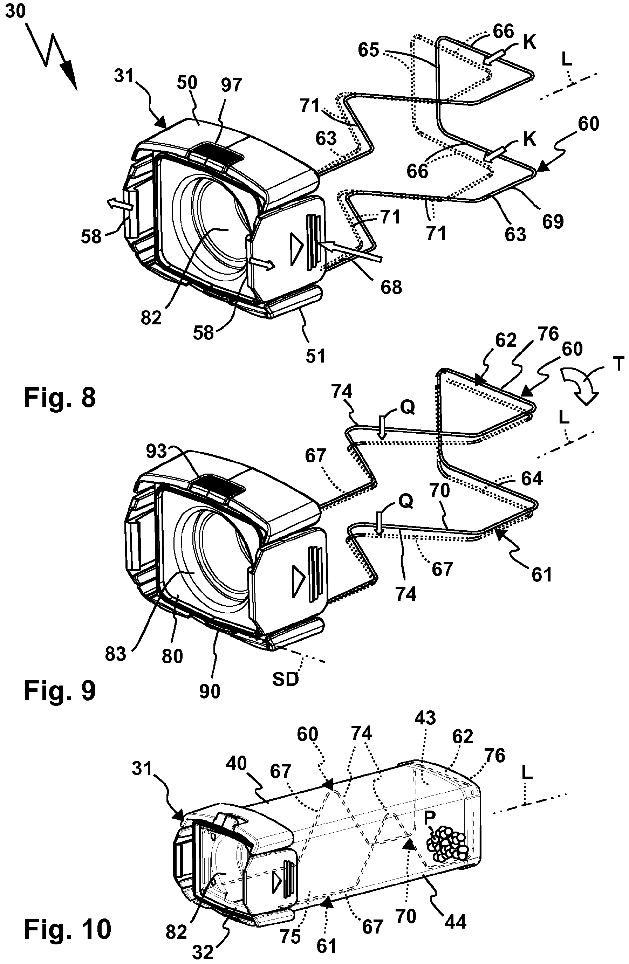

In den Figuren 7 und 10 ist erkennbar, dass Längsstützabschnitte 68, 69 jeweils an einer der Längskanten 45 oder 46 angeordnet sind bzw. dort verlaufen, die Federabschnitte 71 jedoch nicht ganz bis zur gegenüberliegenden Längskante 45 oder 46 reichen. Insbesondere ist es vorteilhaft, wenn beispielsweise die Längsträger 67 im Bereich einer Seitenwand der Umfangswand 41 verlaufen, beispielsweise der Bodenwand 47 (Figur 10) oder einer der Seitenwände 48, während sie zu der jeweils gegenüberliegenden Wand, also der der Bodenwand 47 gegenüberliegenden Deckwand 49 oder der der einen Seitenwand 48 gegenüberliegenden anderen Seitenwand 48, einen Abstand haben. Bis zu dieser jeweils gegenüberliegenden Deckwand 49 oder Seitenwand 48 reichen nämlich die Federbereiche 74, insbesondere die Scheitel ausbildenden Bogenabschnitte 72 nicht heran. Dies stellt im Zusammenhang mit der nachfolgend erläuterten asymmetrischen Nachgiebigkeit der Staubsammelvorrichtung 30, die insbesondere durch die Struktur und Anordnung des Staubbehälters 40 und der Stützeinrichtung 60 gebildet ist einen Vorteil dar.

In den Figuren 7 und 8 ist erkennbar, dass bei einer in Richtung der Längsachse L wirkenden Druckkraft K die Federbereiche 74 im Sinne einer Verformung nachgeben, was in gestrichelten Linien dargestellt ist. Man erkennt in Figur 7 zu dem, dass der Staubbehälter 40 bei Belastung durch die Druckkraft K nachgibt und beispielsweise Falten wirft.

Allerdings ist die Verformbarkeit der Staubsammelvorrichtung 30 und insbesondere der Stützeinrichtung 60 in Richtung der Längsachse L gering im Vergleich zu einer Nachgiebigkeit oder Verformbarkeit quer zur Längsachse L, beispielsweise bei einer auf die Stützeinrichtung 60 quer zur Längsachse L einwirkenden Querkraft Q (Figur 9). In diesem Fall geben die beiden Längsträger 67 relativ leicht nach, sodass die Staubsammelvorrichtung 30 quer zur Längsachse L nachgibt. Wenn also die Staubsammelvorrichtung 30 bei Nutzung an der Hand-Werkzeugmaschine 10 an einem Hindernis, beispielsweise einem Werkstück, anschlägt, gibt sie quer zur Längsachse L nach.

Weiterhin sind die Längsträger 67, da sie ja nur im Bereich des Basiskörpers 32 und des Querabschnitts 62 quer zur Längsachse L auf Abstand gehalten sind, ansonsten jedoch relativ zueinander beweglich sind, mit relativ geringer Krafteinwirkung tordierbar. Die Federbereiche 74 können sich bei Torsionsbelastung gleichsinnig in eine Drehrichtung verdrehen und bleiben auf Abstand. Wenn also beispielsweise eine Drehkraft oder Torsionskraft T im Sinne einer Drehung um die Längsachse L auf den Staubbehälter 40 und mithin die darin angeordnete Stützeinrichtung 60 einwirkt, geben diese beiden Komponenten nach. Auch dies trägt dazu bei, dass Staubsammelvorrichtung 30 zwar grundsätzlich durch die Stützeinrichtung 60 ausgesteift ist, jedoch beim Anschlagen an einem Hindernis nachgibt.

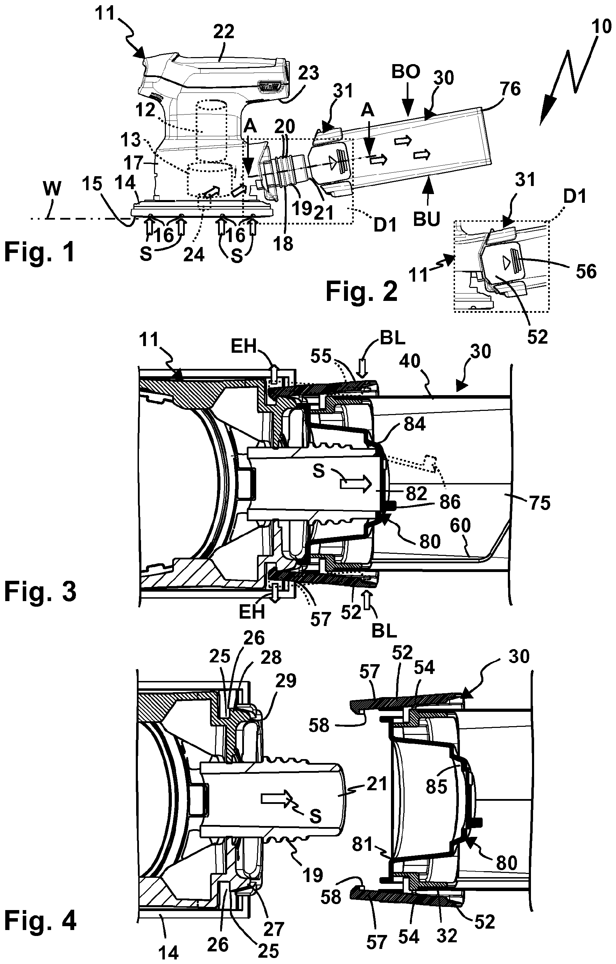

Bei der Ausgestaltung gemäß Figuren 7-9 liegen die Federbereiche 74 an der Bodenwand 47 und der Deckwand 49 an oder sind an diesen Wänden angeordnet. Bei der Ausgestaltung gemäß Figur 10 hingegen liegen die Federbereiche an den Seitenwänden 48 an oder sind bei den Seitenwänden 48 angeordnet. Dies hat Vorteile in Bezug auf die Nachgiebigkeit der Staubsammelvorrichtung 30, wenn sie durch in dem Staubsammelraum 75 gesammelte Partikel P beladen ist. Zum Werkstück W hin, also in der Zeichnung nach Figur 1 nach unten, sind nämlich die beiden Längsträger 67, die an der Bodenwand 47 entlang verlaufen, relativ wenig nachgiebig. Zudem wird bei einer Belastung BU durch Partikel P im Staubsammelraum 75 die Deckwand 43 über die Federbereiche 74 hinweg gespannt, sodass es sich beispielsweise an den Bogenabschnitten 72 abstützen kann. In Gegenrichtung, d.h. bei einer Belastung BO in Figur 1 nach oben, beispielsweise wenn der Staubbehälter 40 am Werkstück W anschlägt, gibt die Staubsammelvorrichtung 30 hingegen leichter nach.

Die Einlassöffnung 34 ist anhand eines Deckels 80 verschließbar. Der Deckel 80 umfasst einen plattenartigen Deckelgrundkörper 81. Eine Umfangskontur oder Flächenausdehnung des Deckelgrundkörpers 81 entspricht im Wesentlichen derjenigen des Rahmenkörpers 35 des Basiskörpers 32, so dass der Deckelgrundkörper 81 frontseitig an den Basiskörper 32 anlegbar ist. Dann kommuniziert ein Staubeinlass 82 mit der Einlassöffnung 84 derart, dass der Partikelstrom S durch den Staubeinlass 82 und die Einlassöffnung 84 in den Staubsammelraum 75 einströmen kann.

An dem Deckelgrundkörper 81 ist eine Steckaufnahme 83 für den Maschinen-Staubauslass 18, insbesondere den Staubauslasskörper 19 vorgesehen. Die Steckaufnahme 83 weist einen Aufnahmetrichter 84 auf, der sich konisch zu einem Boden 85 hin verengt. Somit findet der Staubauslasskörper 19 sozusagen automatisch in den Aufnahmetrichter 84 und zum Boden 85. An dem Boden 85 ist der Staubeinlass 83 vorgesehen. Eine Stirnseite des Staubauslasskörpers 18 kann an einer Bodenfläche des Bodens 85, die sich um den Staubeinlass 82 erstreckt, stirnseitig anliegen.

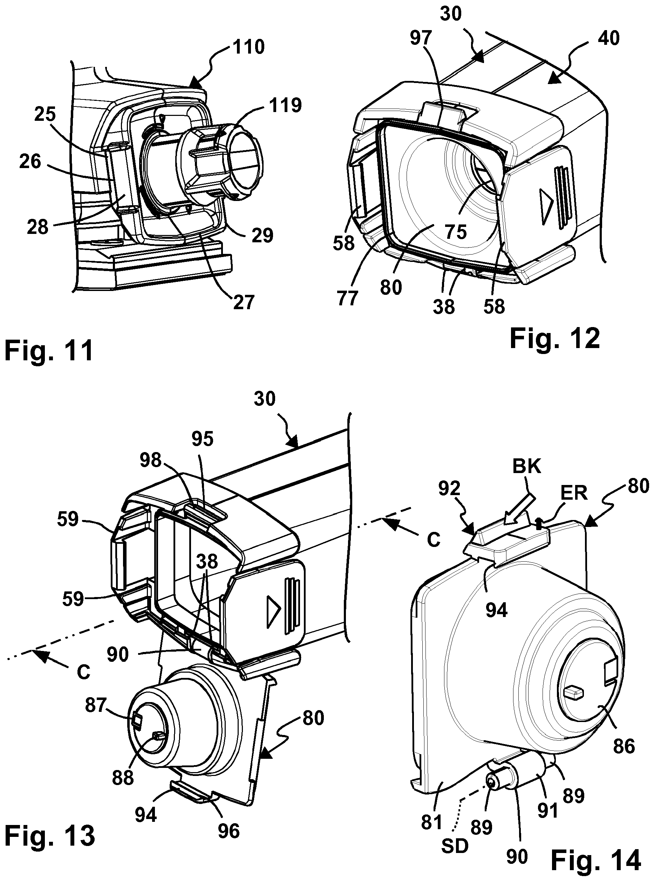

An dem Staubeinlass 82 ist weiterhin ein Ventilkörper 86 vorgesehen, mit dem der Staubeinlass 82 verschließbar ist. Der Ventilkörper 86 hat eine plattenartige Gestalt. Der Ventilkörper 86 ist mittels eines Schwenklagers 87 schwenkbar neben dem Staubeinlass 83 gelagert. Der Ventilkörper 86 kann zwischen einer Schließstellung, in der er wie in den Figuren 13 und 14 sichtbar am Außenumfang des Staubeinlasses 82 dicht anliegt, und einer Offenstellung, in der er vom Staubeinlass 82 weggeschwenkt ist, verstellt werden, beispielsweise durch den Partikelstrom S und/oder durch den Staubauslasskörper 19. Denkbar ist es nämlich, dass der Staubauslasskörper 19 durch den Staubeinlass 82 durchsteckbar ist und dabei den Ventilkörper 86 in Richtung der Offenstellung betätigt. Weiterhin ist es möglich, den Ventilkörper 86 sozusagen manuell zu betätigen, beispielsweise anhand eines Griffelements 88, das vor den Ventilkörper 86 vorsteht.

Der Ventilkörper 86 bildet sozusagen ein Rückschlagventil oder eine Rückschlagklappe.

Wenn also der Deckel 80 die Einlassöffnung 34 verschließt, verschließt zugleich der Ventilkörper 86 den Staubeinlass 82, zumindest dann, wenn die Staubsammelvorrichtung 80 von der Hand-Werkzeugmaschine 10 entfernt wird oder entfernt ist. Somit können also die im Staubsammelraum 75 gesammelten Partikel P nicht in die Umwelt entweichen, ohne dass der Deckel 80 von der Einlassöffnung 34 entfernt wird.

Der Deckel 80 kann zwischen einer die Einlassöffnung 34 verschließenden Schließstellung V und einer die Einlassöffnung 34 zum Entleeren des Staubbehälters 40 freigebenden Offenstellung O verstellt werden. Dazu ist der Deckel 80 anhand eines Lagers 90 um eine Schwenkachse SD schwenkbar am Basiskörper 32 gelagert. Das Lager 90 umfasst beispielsweise Lagerwellenteile 89, die vor einen Lagerkörper 91 in Bezug auf die Schwenkachse SD seitlich vorstehen und in Lageraufnahmen 38 des Basiskörpers 32 eingreifen. Alternativ könnte das Lager 90 ohne weiteres auch als ein Filmscharnier ausgestaltet sein.

Das Lager 90 und Befestigungsmittel 92 zum lösbaren Befestigen des Deckels 80 am Basiskörper 32 sind an einander entgegengesetzten Seiten des Basiskörpers 32 angeordnet. Die Befestigungsmittel 92 umfassen beispielsweise einen Haken 93, der an seinem freien Endbereich einen Hakenvorsprung 94 zum Eingriff in eine Hakenaufnahme 95 am Basiskörper 32 aufweist.

Die Hakenaufnahme 95 ist beispielsweise an einem Deckelement 50 angeordnet, welches ebenso wie ein Deckelement 51 am Basiskörper 91 angeordnet ist. Die Lageraufnahmen 38 können beispielsweise am Deckelement 51 vorgesehen sein. Die Deckelemente 51 und 50 sind beispielsweise an einander entgegengesetzten Schmalseiten des Basiskörpers 32 angeordnet. Die Steckelemente 51 und 50 können beispielsweise den Halterahmen 36 überdecken und eignen sich unter anderem zu einem bequemen Ergreifen der Staubsammelvorrichtung 40 mit beispielsweise zwei Fingern.

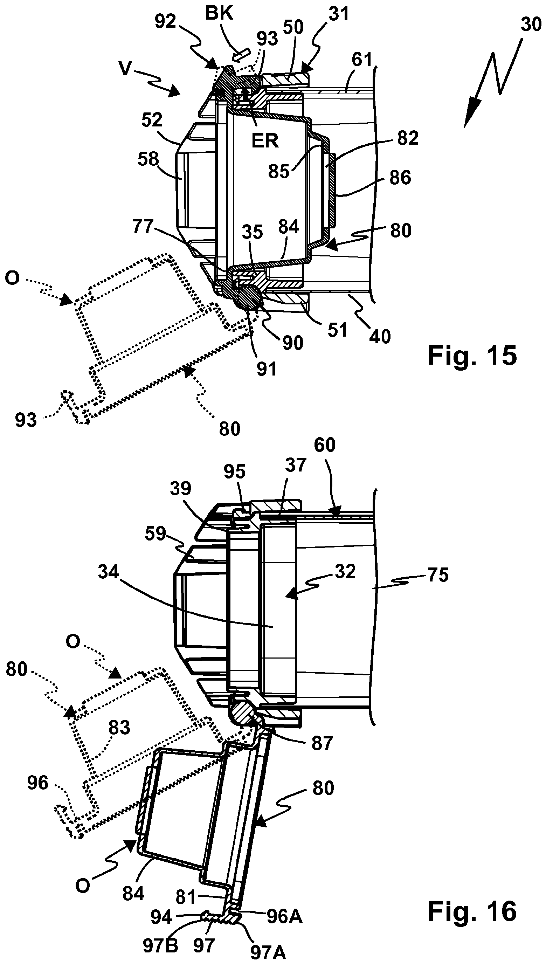

Ein Basisabschnitt 96 des Hakens 93 ist mit dem Deckelgrundkörper 81 verbunden und biegeflexibel. Somit kann der Haken 93 außer Eingriff mit der Hakenaufnahme 95 schwenken, beispielsweise indem er von einem Bediener an einem Griffabschnitt 97 ergriffen und aus der Hakenaufnahme 95 heraus geschwenkt wird. Dies ist in gestrichelten Linien in Figur 15 dargestellt. Dann kann der Deckel 80 von der Einlassöffnung 34 weg in die Offenstellung O schwenken (siehe Figuren 15, 16), sodass die Einlassöffnung 34 zum Entleeren des Staubsammelraums 75 offen steht. In umgekehrter Richtung kann der Deckel 80 wiederum in die Schließstellung V betätigt werden, wobei dann der Hakenvorsprung 94 in die Hakenaufnahme 95 selbsttätig einrastet. Der Basisabschnitt 96 ist nämlich federnd elastisch, sodass der Hakenvorsprung 94 durch einen sich vorder Hakenaufnahme 95 befindlichen Abschnitt 98 des Basiskörpers 32 oder des Deckelements 50 auslenkbar ist, beispielsweise durch eine Betätigungskraft BK, die auf den Griffabschnitt 97 einwirkt. Dann wird der Vorsprung 94 aus der Hakenaufnahme 95 heraus bewegt, was durch einen Pfeil ER in Figur 14 oder 15 angedeutet ist.

Der Griffabschnitt 97 ist zweckmäßigerweise an einem Hebel vorgesehen, an dessen einem Arm 97B der Vorsprung 94 und dessen anderer Arm 97A in einen Bewegungsraum oder Schlitz 96A hineinschwenken kann, der zwischen dem 97 und dem Deckelgrundkörper 81 vorgesehen ist.

Die Lagerwellenteile 89 und der Lagerkörper 91, also Lagerelemente des Lagers 90, sind vorzugsweise einstückig mit dem Deckelgrundkörper 81. Ebenfalls vorteilhaft ist es, dass der Ventilkörper 86 einstückig mit dem Deckelgrundkörper 81 ist und insbesondere auch das Schwenklager 87, das als Filmscharnier ausgestaltet sein kann, einstückig mit dem Deckelgrundkörper 81 und dem Ventilkörper 86 ist. Ferner ist es vorteilhaft, wenn der Haken 93 einstückig mit dem Deckelgrundkörper 81 ist.

Der gesamte Deckel 80 besteht vorzugsweise aus einem federnd nachgiebigen oder elastischen Kunststoff und/oder aus Gummi. Somit stellt er sozusagen als solches eine Dichtung oder Dichtfläche für die Einlassöffnung 34 dar.

Bevorzugt erstreckt sich um die Einlassöffnung 34 herum ein Dichtvorsprung 39, an dem der Deckelgrundkörper 81 dicht anliegt, wenn der Deckel 80 in die Schließstellung V verstellt ist.

Wenn der Partikelstrom S in den Staubsammelraum 75 einströmt, baut er dort Druck auf. Dadurch wird der Deckel 80 etwas in einem Sinne von der Einlassöffnung 34 weg verformt, wobei diese Verformung im Zentrum des Deckels 80 am stärksten ist und dazu führt, dass Randbereiche des Deckelgrundkörpers 81 und mithin auch der Haken 93 in eine den Basiskörper 32 quasi umgreifende Position verformt werden. Dadurch greift der Haken 93 besonders fest in die Hakenaufnahme 95 ein, wenn der Deckel 80 durch den sich im Staubsammelraum 75 aufbauenden oder befindlichen Druck verformt wird.

Eine an sich eigenständige Erfindung stellt das nachfolgend erläuterte Montagekonzept der Staubsammelvorrichtung 30 an der Handwerkzeugmaschine 10 dar.

Seitlich am Basiskörper 81, zwischen den Deckelementen 50, 51 sind Riegelelemente 52 anhand von Lagern 54 um Schwenkachsen 53A, 53B schwenkbar gelagert. Die Riegelelemente 52 haben von den Lagern 54 einerseits abstehende Betätigungsarme 55. An den Betätigungsarmen 55 sind beispielsweise Griffstrukturen 56 zum Betätigen durch einen Bediener vorgesehen. Wenn der Bediener auf die Griffstrukturen 56 oder die Betätigungsarme 55 drückt (Kraft BL in Figur 3), schwenken die Riegelelemente um ihre Schwenkachsen 53A und 53B, wodurch an Haltearmen 57 vorgesehene Hakenvorsprünge 58 außer Eingriff mit Gegenkonturen 25 oder 225 gelangen (Pfeil EH in Figur 3), so dass die Staubsammelvorrichtung 30 von den Gegenkonturen 25 oder 225 entfernbar ist.

Die Gegenkonturen 25 sind beispielsweise direkt an einer Hand-Werkzeugmaschine 110 vorgesehen, die eine Variante der Hand-Werkzeugmaschine 10 darstellt. Somit kann die Staubsammelvorrichtung 30 anhand der Riegelelemente 52, mithin also anhand einer Verriegelungseinrichtung, die unabhängig von einer Steckverbindung eines den Staubauslass 18 der Hand-Werkzeugmaschine 110 aufweisenden Staubauslasskörpers 119 mit der Steckaufnahme 83 der Staubsammelvorrichtung 30 ist, an der Handwerkzeugmaschine 10 zuverlässig befestigt oder verriegelt werden.

Die Riegelelemente 52 sind zwischen den Deckelementen 50, 51 an einander entgegengesetzten Seiten des Basiskörpers 32 vorgesehen. Sie können zangenartig die Gegenkonturen 25, 225 umgreifen oder klammern.

Die Gegenkonturen 25 umfassen beispielsweise Hakenaufnahmen 26, die an einem Befestigungsabschnitt 27 der Hand-Werkzeugmaschine 110 vorgesehen sind. Die Hakenaufnahmen 26 sind an Hakenvorsprüngen 28 vorgesehen, die einander entgegengesetzt seitlich vor den Befestigungsabschnitt 27 vorstehen.

Eine Stirnseite des Befestigungsabschnitts 27 ist zweckmäßigerweise mit einem Dichtvorsprung oder Anlagevorsprung 29 ausgestattet, der dicht am Deckel 80, insbesondere dessen Deckelgrundkörper 81 oder einem vom Deckelgrundkörper 81 vorstehenden Dichtvorsprung 81A anliegt, wenn die Staubsammelvorrichtung 30 an der Handwerkzeugmaschine 10 anhand der Riegelelemente 52 verriegelt ist.

Der Befestigungsabschnitt 27 kann in eine Aufnahme 77 eindringen, die durch die Deckelemente 50, 51 einerseits und die Riegelelemente 52 andererseits begrenzt ist. Diese Komponenten sind nämlich rahmenartig um die Einlassöffnung 34 und/oder den Deckel 80 herum angeordnet, wenn dieser seine Schließstellung V einnimmt.

Vorteilhaft sind an den Riegelelementen 52 Führungskonturen 59, insbesondere Längsführungskonturen, vorgesehen, die beispielsweise zum Führen der Staubsammelvorrichtung 3 an dem Befestigungsabschnitt 27 geeignet sind.

Der Aufnahmetrichter 84 ist an sich nicht dafür vorgesehen, einen im Wesentlichen zylindrischen oder rohrförmigen Staubauslasskörper, beispielsweise den Staubauslasskörper 119, formschlüssig aufzunehmen. Der zuverlässige Halt der Staubsammelvorrichtung 30 an der Handwerkzeugmaschine 110 wird durch die Verriegelung anhand der Riegelelemente 52 hergestellt. Eine Strömungsdichtigkeit bezüglich des Partikelstroms S wird beispielsweise durch den Dichtsitz an dem Dichtvorsprung 29 und/oder durch die stirnseitige Anlage des Staubauslasskörpers 119 am Boden 85 des Deckels 80 gewährleistet.

Es sei aber an dieser Stelle ausdrücklich erwähnt, dass anstelle des relativ weiten Aufnahmetrichters 84 durchaus eine Steckaufnahme zum formschlüssigen Aufnehmen eines rohrförmigen Staubauslasskörpers einer Hand-Werkzeugmaschine oder eines Adapters bei einem Deckel einer Staubsammelvorrichtung gemäß der Erfindung vorgesehen sein kann. Dann wäre beispielsweise der nachfolgend erläuterte Adapter 200 nicht notwendig.

Zu einer Montage der Staubsammelvorrichtung 30 an einer sozusagen konventionellen Hand-Werkzeugmaschine, nämlich der Hand-Werkzeugmaschine 10, die die Gegenkonturen 25 nicht aufweist, kann ein Adapter 200 vorgesehen sein. Exemplarisch sind aber auch bei der Hand-Werkzeugmaschine 10 die Gegenkonturen 25 vorgesehen

Der Adapter 200 hat einen plattenartigen Grundkörper 201, an dem ein Verbindungskörper 202 angeordnet ist. Der Verbindungskörper 202 hat eine im Wesentlichen rohrförmige Gestalt oder wird durch ein Rohrstück gebildet. Der Verbindungskörper 202 weist einen Adapter-Staubeinlass 203 auf, in den beispielsweise der Staubauslasskörper 19 einsteckbar ist. Der Adapter-Staubeinlass 203 weist eine Steckaufnahme 204 auf. In der Steckaufnahme 204 sind beispielsweise Riffelungen oder dergleichen andere Widerhaltstrukturen 212 zum Eingriff der Widerhaltstrukturen 20 vorgesehen. Dadurch ist der in die Steckaufnahme 204 eingesteckte Staubauslasskörper 19 zumindest für einen Betrieb der Handwerkzeugmaschine 10 zusammen mit der Staubsammelvorrichtung 30 zugfest fixierbar. Bei Nichtgebrauch oder zum Entleeren kann die Staubsammelvorrichtung 30 jedoch ohne weiteres vom Staubauslasskörper 19 abgezogen werden, d.h. die mit dem Adapter 200 ausgestattete Staubsammelvorrichtung 30 ist wie ein typischer Staubsammelsack an einer Hand-Werkzeugmaschine durch eine einfache Steckverbindung befestigbar und auch wieder durch eine Zugbewegung von der Hand-Werkzeugmaschine lösbar.

Der Grundkörper 201 des Adapters 200 kann in die durch die Deckelemente 50, 51 und die Riegelelemente 52 begrenzte Aufnahme 77 eintauchen.

Die bereits erwähnten Riegelelemente 52 sorgen für einen festen Halt des Adapters 200 am Basiskörper 32 und somit am Staubeinlass 82. An einander entgegengesetzten Schmalseitenbereichen sind nämlich die Gegenkonturen 225 vorgesehen, die Hakenaufnahmen 226 umfassen. In die Hakenaufnahmen 226 können die Hakenvorsprünge 58 eingreifen. Die Riegelelemente 52 und die Gegenkonturen 225 bilden somit Haltemittel 227 zum Halten des Adapters 200 bezüglich des Basiskörpers 32.

Der Verbindungskörper 202 ist durch eine Durchtrittsöffnung 205 des Grundkörpers 201 durchgesteckt. Vor den Verbindungskörper 202 stehen nach radial außen insbesondere flanschartige Vorsprünge 206, 207 vor, zwischen denen eine Ausnehmung 208, insbesondere in der Art einer Radialnut, ausgebildet ist. In diese Ausnehmung 208 greift eine die Durchtrittsöffnung 205 umgebende Umfangswand 209 des Grundkörpers 201 ein, so dass der Verbindungskörper 202 in Bezug auf seine Längsachse LX, die der Strömungsrichtung des Partikelstroms S entspricht, an dem Grundkörper 201 gehalten ist.

Ein Staubauslassabschnitt 210 des Verbindungskörpers 202, der mit dem Adapter-Staubeinlass 203 in Strömungsverbindung steht, kommuniziert mit dem Staubeinlass 82. Der Staubauslassabschnitt taucht in die Steckaufnahme 83 ein, wenn der Adapter 200 am Basiskörper 32 durch die Haltemittel 227 gehalten ist. Eine Stirnseite 211 des Verbindungskörpers 202 liegt dabei am Boden 85 an.

In der Schnittdarstellung gemäß Figur 7 wird deutlich, dass der Adapter 200 in Bezug auf den Partikelstrom S strömungsdicht und im Wesentlichen druckdicht am Basiskörper 32 gehalten ist. Zum einen ist der oben erwähnte Dichtsitz der Stirnseite 211 hierfür vorteilhaft, zum andern aber auch, dass der Grundkörper 201 zumindest im Wesentlichen dicht an dem Deckelgrundkörper 81, der ja aus elastischem Material, insbesondere Gummi besteht, anliegt. Vorteilhaft kann noch ein Dichtvorsprung 213 vorgesehen sein, der an der Fläche des Deckelgrundkörpers 81 oder dem vor diesen vorstehenden Dichtvorsprung 81A in einem Dichtsitz anliegt.

## Patentansprüche

1. Staubsammelvorrichtung für eine Hand-Werkzeugmaschine (10), insbesondere für eine Säge oder eine Schleifmaschine, die eine Anschlusseinrichtung (31) mit einem Basiskörper (32) und einem bei oder an dem Basiskörper (32) angeordneten Staubeinlass (82) zum Anschluss an einen Maschinen-Staubauslass (18) der Hand-Werkzeugmaschine (10) aufweist, so dass der Maschinen-Staubauslass (18) mit dem Staubeinlass (82) der Staubsammelvorrichtung (30) kommuniziert und aus dem Maschinen-Staubauslass (18) ausströmende Partikel (P) in einen Staubsammelraum (75) eines flexiblen Staubbehälters (40) der Staubsammelvorrichtung (30) einströmen können, wobei der Staubbehälter (40) durch einen Längsabschnitt (61) einer Stützeinrichtung (60) von dem Basiskörper (32) bis zu seinem Längsendbereich (76) entlang einer Längsachse (L) der Staubsammelvorrichtung (30) und in dem Längsendbereich (76) durch einen Querabschnitt (62) der Stützeinrichtung (60) quer zur Längsachse (L) über seinen Innenquerschnitt (43) gestützt ist, so dass der Staubbehälter (40) durch die Stützeinrichtung (60) quer zur Längsachse (L) aufgespannt ist und sich der Staubsammelraum (75) von dem Staubeinlass (82) zu dem Längsendbereich (76) des Staubbehälters (40) erstreckt, wobei der Längsabschnitt (61) der Stützeinrichtung (60) sich nur über einen Teilumfang des Umfangs (44) des Staubbehälters (40) quer zur Längsachse (L) erstreckt und eine Federanordnung (70) aufweist, die für eine elastische Nachgiebigkeit der Staubsammelvorrichtung (30) quer zur Längsachse (L) und/oder entlang der Längsachse (L) und/oder im Sinne einer Torsion um die Längsachse (L) federnd nachgiebig ist, **dadurch gekennzeichnet, dass** der Längsabschnitt (61) der Stützeinrichtung (60), insbesondere mindestens ein Längsträger (67) der Stützeinrichtung (60), im Bereich einer beim Betrieb der Handwerkzeugmaschine zu einem Werkstück am nächsten liegende Wandfläche des Staubbehälters (40) oder Kante der Umfangskontur des Staubbehälters (40) verläuft.

2. Staubsammelvorrichtung (30) nach Anspruch 1, **dadurch gekennzeichnet, dass** der Längsabschnitt (61) der Stützeinrichtung (60), insbesondere mindestens ein Längsträger (67) der Stützeinrichtung (60), keinen sich über den gesamten Innenumfang des Staubbehälters (40) erstreckenden Stützabschnitt aufweist.

3. Staubsammelvorrichtung (30) nach Anspruch 1 oder 2, **dadurch gekennzeichnet, dass** der Längsabschnitt (61) der Stützeinrichtung (60) mindestens zwei oder exakt zwei oder mindestens einen sich zwischen dem Basiskörper (32) und dem Querabschnitt (62) erstreckenden Längsträger (67) aufweist.

4. Staubsammelvorrichtung nach einem der vorhergehenden Ansprüche, **dadurch gekennzeichnet, dass** die Stützeinrichtung (60) mindestens zwei oder exakt zwei sich zwischen dem Basiskörper (32) und dem Querabschnitt (62) der Stützeinrichtung (60) erstreckende Längsträger (67) aufweist, die zwischen dem Basiskörper (32) und dem Querabschnitt (62) nicht miteinander verbunden sind und/oder parallel zueinander verlaufen.

5. Staubsammelvorrichtung (30) nach einem der vorhergehenden Ansprüche, **dadurch gekennzeichnet, dass** der Längsabschnitt (61) der Stützeinrichtung (60), insbesondere ein sich zwischen dem Basiskörper (32) und dem Querabschnitt (62) erstreckender Längsträger (67), mindestens einen Federbereich (74), insbesondere ausschließlich einen Federbereich (74), der Federanordnung (70) aufweist, welcher in Bezug auf die Längsachse (L) federnd verformbar ist und zwischen in Bezug auf die Längsachse (L) im wesentlichen biegesteife und/oder gegenüber dem Federbereich (74) biegesteifere Längsstützabschnitte (68) aufweist und/oder mindestens zwei Federabschnitte (71) aufweist.

6. Staubsammelvorrichtung nach einem der vorhergehenden Ansprüche, **dadurch gekennzeichnet, dass** mindestens ein sich zwischen dem Basiskörper (32) und dem Querabschnitt (62) erstreckender Längsträger (67) der Stützeinrichtung (60) einen Federbereich (74) mit mindestens zwei oder exakt zwei quer zur Längsachse (L) verlaufenden Federabschnitten (71) der Federanordnung (70) aufweist.

7. Staubsammelvorrichtung nach Anspruch 5 oder 6, **dadurch gekennzeichnet, dass** die Federabschnitte (71) eine V-förmige oder U-förmige Federstruktur bilden und/oder der Federbereich (74) sich entlang einer, insbesondere im Wesentlichen planen, Seitenwand des Staubbehälters (40) erstreckt und/oder der Federbereich (74) sich ausgehend von einem Wandbereich der Umfangskontur des Staubbehälters (40) zu einem gegenüberliegenden Wandbereich des Staubbehälters (40) erstreckt und vorzugsweise einen Abstand zu diesem Wandbereich aufweist.

8. Staubsammelvorrichtung nach einem der vorhergehenden Ansprüche, **dadurch gekennzeichnet, dass** der Querabschnitt (62) der Stützeinrichtung (60) einen Stützbügel (64) oder Stützrahmen bildet oder aufweist und/oder eine von dem Staubbehälter (40) lösbare oder separate Komponente ist, wobei zweckmäßigerweise vorgesehen ist, dass der Stützbügel (64) eine U-förmige oder V-förmige Gestalt aufweist und/oder der Stützbügel (64) oder Stützrahmen Längsenden zweier Längsträger (67) der Stützeinrichtung (60) miteinander verbindet, die sich zwischen dem Staubeinlass (82) oder dem Basiskörper (32) und dem Querabschnitt (62) der Stützeinrichtung (60) erstrecken.

9. Staubsammelvorrichtung nach einem der vorhergehenden Ansprüche, **dadurch gekennzeichnet, dass** der Querabschnitt (62) und der Längsabschnitt (61) der Stützeinrichtung (60) einstückig und/oder fest miteinander verbunden sind oder der Querabschnitt (62) der Stützeinrichtung (60) einen Teil des Staubbehälters (40) und der Längsabschnitt (61) der Stützeinrichtung (60) ein vom Staubbehälter (40) separates Bauteil ist.

10. Staubsammelvorrichtung nach einem der vorhergehenden Ansprüche, **dadurch gekennzeichnet, dass** die Stützeinrichtung (60) durch einen einzigen, insbesondere drahtförmigen, in seinem Längsverlauf zum Aufspannen des Staubsammelraums (75) zu einer dreidimensionalen Struktur geformten oder umgeformten Stützkörper (63) oder Stützdraht gebildet ist, wobei zweckmäßigerweise vorgesehen ist, dass beide Längsenden des Stützkörpers (63) im Bereich des Staubeinlasses (82) oder im Bereich des Längsendbereichs (76) des Staubbehälters (40) angeordnet, insbesondere miteinander oder mit dem Basiskörper (32) verbunden sind.

11. Staubsammelvorrichtung nach einem der vorhergehenden Ansprüche, **dadurch gekennzeichnet, dass** eine Biegesteifigkeit der Stützeinrichtung (60) in Richtung der Längsachse (L) höher, insbesondere mindestens zweimal oder dreimal oder viermal höher, als eine Biegesteifigkeit der Stützeinrichtung (60) quer zu der Längsachse (L) oder als eine Torsionsfestigkeit um die Längsachse (L) ist.

12. Staubsammelvorrichtung nach einem der vorhergehenden Ansprüche, **dadurch gekennzeichnet, dass** die elastische Nachgiebigkeit der Staubsammelvorrichtung, insbesondere durch Anordnung und/oder Ausgestaltung der Stützeinrichtung (60) und/oder die Ausgestaltung des Staubbeutels, quer zur Längsachse (L) asymmetrisch groß ist, so dass die Staubsammelvorrichtung, insbesondere die Stützeinrichtung (60), in Richtung eines durch die Hand-Werkzeugmaschine (10) zu bearbeitenden Werkstücks weniger nachgiebig als von dem Werkstück weg ist.

13. Staubsammelvorrichtung (30) nach einem der vorhergehenden Ansprüche, **dadurch gekennzeichnet, dass** die Stützeinrichtung (60) insbesondere lose in einem Innenraum, insbesondere dem Staubsammelraum (75), des Staubbehälters (40) angeordnet ist und/oder der Staubsammelbehälter mindestens eine luftdurchlässige Wand aufweist und/oder keine sich von dem Basiskörper (32) zu dem Querabschnitt (62) erstreckenden Komponente der Stützeinrichtung (60) an einer bei Gebrauch der Staubsammelvorrichtung zu einem Werkstück entgegengesetzten Wandfläche anliegt.

14. Staubsammelvorrichtung (30) nach einem der vorhergehenden Ansprüche, **dadurch gekennzeichnet, dass** der Staubeinlass (82) an einem Deckel (80) angeordnet ist, der zwischen einer eine zum Entleeren des Staubsammelraums (75) vorgesehene Einlassöffnung (34) der Staubsammelvorrichtung freigebenden Offenstellung (O) und einer die Einlassöffnung (34) verschließenden Schließstellung (V) verstellbar ist.

15. Hand-Werkzeugmaschine (10), insbesondere Säge oder Schleifmaschine, mit einer Staubsammelvorrichtung nach einem der vorhergehenden Ansprüche.

## Claims

1. Dust collecting device for a handheld machine tool (10), in particular for a saw or a grinding machine, which has a connection apparatus (31) to a base body (32) and to a dust inlet (82) arranged at or on the base body (32) for connection to a machine dust outlet (18) of the handheld machine tool (10) such that the machine dust outlet (18) communicates with the dust inlet (82) of the dust collecting device (30) and particles (P) flowing out of the machine dust outlet (18) can flow into a dust collecting chamber (75) of a flexible dust container (40) of the dust collecting device (30), wherein the dust container (40) is supported by a longitudinal section (61) of a support apparatus (60) from the base body (32) up to its longitudinal end region (76) along a longitudinal axis (L) of the dust collecting device (30) and in the longitudinal end region (76) by a transverse section (62) of the support apparatus (60) transverse to the longitudinal axis (L) over its inner cross-section (43) such that the dust container (40) is mounted by the support apparatus (60) transverse to the longitudinal axis (L) and the dust collecting chamber (75) extends from the dust inlet (82) to the longitudinal end region (76) of the dust container (40), wherein the longitudinal section (61) of the support apparatus (60) extends only over a partial circumference of the circumference (44) of the dust container (40) transverse to the longitudinal axis (L) and has a spring assembly (70), which is resiliently flexible for an elastic flexibility of the dust collecting device (30) transverse to the longitudinal axis (L) and/or along the longitudinal axis (L) and/or in terms of a torsion around the longitudinal axis (L), **characterised in that** the longitudinal section (61) of the support apparatus (60), in particular at least one longitudinal member (67) of the support apparatus (60), runs, in the region of a wall surface, closest to a workpiece during operation of the handheld machine tool, of the dust container (40) or edge of the circumferential contour of the dust container (40).

2. Dust collecting device (30) according to claim 1, **characterised in that** the longitudinal section (61) of the support apparatus (60), in particular at least one longitudinal member (67) of the support apparatus (60), does not have a support section extending over the entire inner circumference of the dust container (40).

3. Dust collecting device (30) according to claim 1 or 2, **characterised in that** the longitudinal section (61) of the support apparatus (60) has at least two or exactly two or at least one longitudinal member (67) extending between the base body (32) and the transverse section (62).

4. Dust collecting device according to any one of the preceding claims, **characterised in that** the support apparatus (60) has at least two or exactly two longitudinal members (67) extending between the base body (32) and the transverse section (62) of the support apparatus (60), which are not connected to one another between the base body (32) and the transverse section (62) and/or run parallel to one another.

5. Dust collecting device (30) according to any one of the preceding claims, **characterised in that** the longitudinal section (61) of the support apparatus (60), in particular a longitudinal member (67) extending between the base body (32) and the transverse section (62), has at least one spring region (74), in particular exclusively one spring region (74), of the spring assembly (70), which is elastically deformable in relation to the longitudinal axis (L) and has substantially rigid longitudinal member sections (68) in relation to the longitudinal axis (L) and/or more rigid compared to the spring region (74) and/or has at least two spring sections (71).

6. Dust collecting device according to any one of the preceding claims, **characterised in that** at least one longitudinal member (67) of the support apparatus (60) extending between the base body (32) and the transverse section (62) has a spring region (74) with at least two or exactly two spring sections (71) of the spring assembly (70), which run transverse to the longitudinal axis (L).

7. Dust collecting device according to claim 5 or 6, **characterised in that** the spring sections (71) form a V-shaped or U-shaped spring structure and/or the spring region (74) extends along a, in particular substantially flat side wall of the dust container (40) and/or the spring region (74) extends, proceeding from a wall region of the circumferential contour of the dust container (40), to an opposing wall region of the dust container (40) and preferably has a spacing to this wall region.

8. Dust collecting device according to any one of the preceding claims, **characterised in that** the transverse section (62) of the support apparatus (60) forms or has a support bracket (64) or support frame and/or is a component detachable or separate from the dust container (40), wherein it is expediently provided that the support bracket (64) has a U-shaped or V-shaped design and/or the support bracket (64) or the support frame connects longitudinal ends of two longitudinal members (67) of the support apparatus (60) to one another, which extend between the dust inlet (82) or the base body (32) and the transverse section (62) of the support apparatus (60).

9. Dust collecting device according to any one of the preceding claims, **characterised in that** the transverse section (62) and the longitudinal section (61) of the support apparatus (60) are connected integrally and/or fixedly with one another or the transverse section (62) of the support apparatus (60) is a part of the dust container (40) and the longitudinal section (61) of the support apparatus (60) is a component separate from the dust container (40).

10. Dust collecting device according to any one of the preceding claims, **characterised in that** the support apparatus (60) is formed by a single, in particular wire-shaped, support body (63) or support wire which is shaped or reshaped into a three-dimensional structure along its longitudinal profile to mount the dust collecting chamber (75), wherein it is expediently provided that both longitudinal ends of the support body (63) are arranged in the region of the dust inlet (82) or in the region of the longitudinal end region (76) of the dust container (40), in particular connected to one another or to the base body (32).

11. Dust collecting device according to any one of the preceding claims, **characterised in that** a rigidity of the support apparatus (60) in the direction of the longitudinal axis (L) is greater, in particular twice or three times or four times greater than a rigidity of the support apparatus (60) transverse to the longitudinal axis (L) or than a torsional strength around the longitudinal axis (L).

12. Dust collecting device according to any one of the preceding claims, **characterised in that** the elastic flexibility of the dust collecting device, in particular through arrangement and/or design of the support apparatus (60) and/or the design of the dust bag, transverse to the longitudinal axis (L) is asymmetrically great such that the dust collecting device, in particular the support apparatus (60), is less flexible in the direction of a workpiece to be processed by the handheld machine tool (10) than it is away from the workpiece.

13. Dust collecting device (30) according to any one of the preceding claims, **characterised in that** the support apparatus (60) is arranged, in particular loosely in an inner chamber, in particular in the dust collecting chamber (75), of the dust container (40) and/or the dust collecting container has at least one air-permeable wall and/or no component of the support apparatus (60), which extends from the base body (32) to the transverse section (62), rests on a wall surface opposed to a workpiece when the dust collecting device is in use.

14. Dust collecting device (30) according to any one of the preceding claims, **characterised in that** the dust inlet (82) is arranged on a lid (80), which can be adjusted between an open position (O) releasing an inlet opening (34) of the dust collecting device provided to empty the dust collecting chamber (75), and a closed position (V) sealing the inlet opening (34).

15. Handheld machine tool (10), in particular saw or grinding machine, with a dust collecting device according to any one of the preceding claims.

## Revendications

1. Dispositif de collecte de poussière pour une machine-outil manuelle (10) en particulier pour une scie ou une ponceuse, qui présente un système de raccordement (31) avec un corps de base (32) et une entrée de poussière (82) disposée à proximité du ou sur le corps de base (32), destinée à être raccordée à une sortie de poussière de machine (18) de la machine-outil manuelle (10) de sorte que la sortie de poussière de machine (18) communique avec l'entrée de poussière (82) du dispositif de collecte de poussière (30) et des particules (P) s'écoulant hors de la sortie de poussière de machine (18) peuvent affluer dans un espace de collecte de poussière (75) d'un bac à poussière (40) flexible du dispositif de collecte de poussière (30), dans lequel le bac à poussière (40) est soutenu par une section longitudinale (61) d'un système de soutien (60) depuis le corps de base (32) jusqu'à sa zone d'extrémité longitudinale (76) le long d'un axe longitudinal (L) du dispositif de collecte de poussière (30) et dans la zone d'extrémité longitudinale (76) par une section transversale (62) du système de soutien (60) de manière transversale par rapport à l'axe longitudinal (L) sur sa section transversale intérieure (43) de sorte que le bac à poussière (40) est formé par le système de soutien (60) de manière transversale par rapport à l'axe longitudinal (L) et l'espace de collecte de poussière (75) s'étend depuis l'entrée de poussière (82) vers la zone d'extrémité longitudinale (76) du bac à poussière (40), dans lequel la section longitudinale (61) du système de soutien (60) s'étend seulement sur une périphérie partielle de la périphérie (44) du bac à poussière (40) de manière transversale par rapport à l'axe longitudinal (L) et présente un ensemble formant ressort (70), qui est souple de manière élastique pour une souplesse élastique du dispositif de collecte de poussière (30) de manière transversale par rapport à l'axe longitudinal (L) et/ou le long de l'axe longitudinal (L) et/ou au sens d'une torsion autour de l'axe de longitudinal (L), **caractérisé en ce que** la section longitudinale (61) du système de soutien (60), en particulier au moins un longeron (67) du système de soutien (60) s'étend dans la zone d'une face de paroi du bac à poussière (40) ou d'une arête du contour périphérique du bac à poussière (40) située de manière la plus proche par rapport à une pièce lors du fonctionnement de la machine-outil manuelle.

2. Dispositif de collecte de poussière (30) selon la revendication 1, **caractérisé en ce que** la section longitudinale (61) du système de soutien (60), en particulier au moins un longeron (67) du système de soutien (60), ne présente aucune section de soutien s'étendant sur la totalité de la périphérie intérieure du bac à poussière (40).

3. Dispositif de collecte de poussière (30) selon la revendication 1 ou 2, **caractérisé en ce que** la section longitudinale (61) du système de soutien (60) présente au moins deux ou précisément deux longerons (67) ou au moins un longeron s'étendant entre le corps de base (32) et la section transversale (62).

4. Dispositif de collecte de poussière selon l'une quelconque des revendications précédentes, **caractérisé en ce que** le système de soutien (60) présente au moins deux ou précisément deux longerons (67) s'étendant entre le corps de base (32) et la section transversale (62) du système de soutien (60), qui ne sont pas reliés l'un à l'autre entre le corps de base (32) et la section transversale (62) et/ou s'étendent de manière parallèle l'un par rapport à l'autre.

5. Dispositif de collecte de poussière (30) selon l'une quelconque des revendications précédentes, **caractérisé en ce que** la section longitudinale (61) du système de soutien (60), en particulier un longeron (67) s'étendant entre le corps de base (32) et la section transversale (62), présente au moins une zone de ressort (74), en particulier exclusivement une zone de ressort (74), de l'ensemble formant ressort (70), laquelle peut être déformée de manière élastique par rapport à l'axe longitudinal (L) et présente des sections de soutien longitudinales (68) sensiblement rigides en flexion par rapport à l'axe longitudinal (L) et/ou plus rigides en flexion par rapport à la zone de ressort (74) et/ou présente au moins deux sections de ressort (71).

6. Dispositif de collecte de poussière selon l'une quelconque des revendications précédentes, **caractérisé en ce qu'**au moins un longeron (67), s'étendant entre le corps de base (32) et la section transversale (62), du système d'appui (60) présente une zone de ressort (74) avec au moins deux ou précisément deux sections de ressort (71), s'étendant de manière transversale par rapport à l'axe longitudinal (L), de l'ensemble formant ressort (70).

7. Dispositif de collecte de poussière selon la revendication 5 ou 6, **caractérisé en ce que** les sections de ressort (71) forment une structure de ressort en forme de V ou en forme de U et/ou la zone de ressort (74) s'étend le long d'une paroi latérale, en particulier sensiblement plane, du bac à poussière (40) et/ou la zone de ressort (74) s'étend en partant d'une zone de paroi du contour périphérique du bac à poussière (40) vers une zone de paroi faisant face du bac à poussière (40) et présente de préférence une distance par rapport à ladite zone de paroi.

8. Dispositif de collecte de poussière selon l'une quelconque des revendications précédentes, **caractérisé en ce que** la section transversale (62) du système de soutien (60) forme ou présente un étrier de soutien (64) ou un cadre de soutien et/ou est un composant amovible ou séparé du bac à poussière (40), dans lequel il est prévu de manière opportune que l'étrier de soutien (64) présente une configuration en forme de U ou une forme de V et/ou l'étier de soutien (64) ou le cadre de soutien relient entre elles des extrémités longitudinales de deux longerons (67) du système de soutien (60), qui s'étendent entre l'entrée de poussière (82) ou le corps de base (32) et la section transversale (62) du système de soutien (60).

9. Dispositif de collecte de poussière selon l'une quelconque des revendications précédentes, **caractérisé en ce que** la section transversale (62) et la section longitudinale (61) du système de soutien (60) sont reliées d'un seul tenant et/ou de manière solidaire l'une à l'autre ou la section transversale (62) du système de soutien (60) est une partie du bac à poussière (40) et la section longitudinale (61) du système de soutien (60) est un composant séparé du bac à poussière (40).

10. Dispositif de collecte de poussière selon l'une quelconque des revendications précédentes, **caractérisé en ce que** le système de soutien (60) est formé par un unique corps de soutien (63) ou fil métallique de soutien, en particulier en forme de fil métallique, façonné ou refaçonné dans son extension longitudinale pour former l'espace de collecte de poussière (75) en une structure tridimensionnelle, dans lequel il est prévu de manière opportune que les deux extrémités longitudinales du corps de soutien (63) sont disposées dans la zone de l'entrée de poussière (82) ou dans la zone de la zone d'extrémité longitudinale (76) du bac à poussière (40), en particulier sont reliées entre elles ou au corps de base (32).

11. Dispositif de collecte de poussière selon l'une quelconque des revendications précédentes, **caractérisé en ce qu'**une rigidité à la flexion du système de soutien (60) est en direction de l'axe longitudinal (L) plus élevée, en particulier au moins deux fois ou trois fois ou quatre fois plus élevée qu'une rigidité en flexion du système de soutien (60) de manière transversale par rapport à l'axe longitudinal (L) ou en tant qu'une solidité à la torsion autour de l'axe longitudinal (L).

12. Dispositif de collecte de poussière selon l'une quelconque des revendications précédentes, **caractérisé en ce que** la souplesse élastique du dispositif de collecte de poussière est asymétriquement grande par rapport à l'axe longitudinal (L), en particulier par l'agencement et/ou la configuration du système de soutien (60) et/ou la configuration du sac à poussière de sorte que le dispositif de collecte de poussière, en particulier le système d'appui (60), est moins souple en direction d'une pièce à usiner par la machine-outil manuelle (10) qu'en s'éloignant de la pièce.

13. Dispositif de collecte de poussière (30) selon l'une quelconque des revendications précédentes, **caractérisé en ce que** le système de soutien (60) est disposé en particulier de manière lâche dans un espace intérieur, en particulier dans l'espace de collecte de poussière (75) du bac à poussière (40) et/ou le bac de collecte de poussière présente au moins une paroi perméable à l'air et/ou aucune composante s'étendant depuis le corps de base (32) vers la section transversale (62), du système de soutien (60) ne repose sur une face de paroi opposée à une pièce lors de l'utilisation du dispositif de collecte de poussière.

14. Dispositif de collecte de poussière (30) selon l'une quelconque des revendications précédentes, **caractérisé en ce que** l'entrée de poussière (82) est disposée sur un couvercle (80), qui peut être ajusté entre une position d'ouverture (O) débloquant une ouverture d'entrée (34), prévue pour vider l'espace de collecte de poussière (75), du dispositif de collecte et une position de fermeture (V) fermant l'ouverture d'entrée (34).

15. Machine-outil manuelle (10), en particulier scie ou ponceuse, avec un dispositif de collecte de poussière selon l'une quelconque des revendications précédentes.
